# EUROPÄISCHE PATENTSCHRIFT

(11) **EP 0 410 930 B1**
(45) Veröffentlichungstag und Bekanntmachung des Hinweises auf die Patenterteilung: **19.04.1995**
(21) Anmeldenummer: 90810546.3
(22) Anmeldetag: 17.07.1990
(51) Int. Cl.: C09B 62/503, D06P 3/10, D06P 1/384

(54) **Faserreaktive Formazanfarbstoffe, Verfahren zu deren Herstellung und deren Verwendung**
Fibre reactive formazane dyes, methods of their preparation and use
Colorants formazane réactifs avec des fibres, leurs procédés de préparation et leur utilisation

(30) Priorität: 24.07.1989 CH 2761/89
(43) Veröffentlichungstag der Anmeldung: 30.01.1991
(73) Patentinhaber: CIBA-GEIGY AG, 4002 Basel (CH)
(72) Erfinder: Lehmann, Urs, Dr., CH-4055 Basel (CH); Koller, Josef, CH-4153 Reinach (CH)

(56) Entgegenhaltungen:
- EP-A- 0 280 139
- EP-A- 0 302 115

## Beschreibung

Die vorliegende Erfindung betrifft neue faserreaktive Formazanfarbstoffe, Verfahren zu deren Herstellung und die Verwendung dieser Farbstoffe zum Färben und Bedrucken von Fasermaterialien.

Gegenstand der vorliegenden Erfindung sind faserreaktive Formazanfarbstoffe der Formel 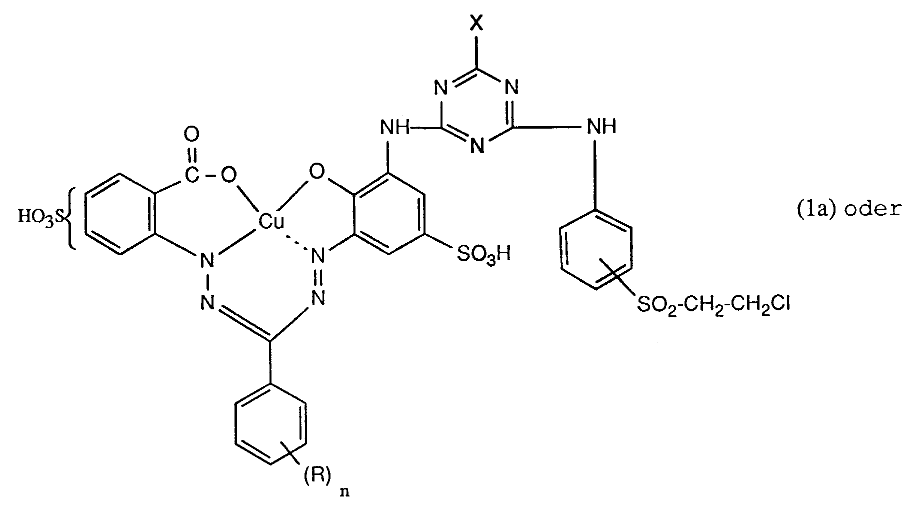 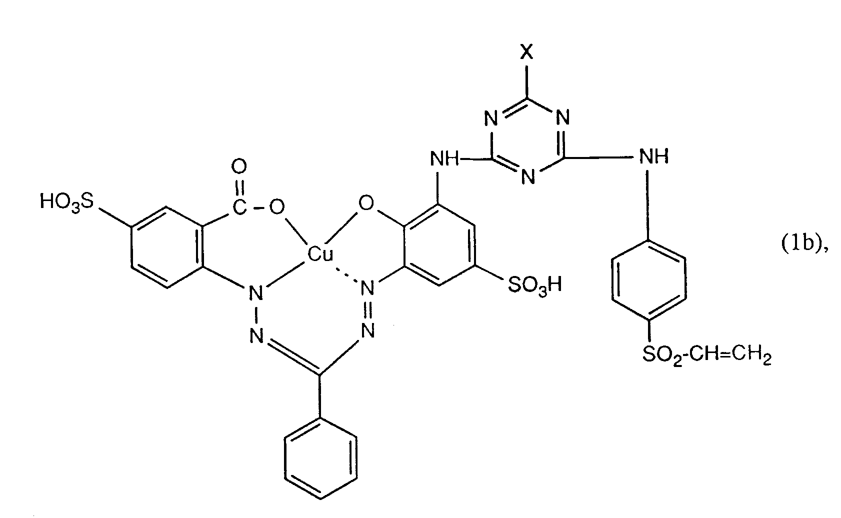
worin R C₁-C₄-Alkyl, C₁-C₄-Alkoxy, Halogen, Cyan oder Nitro, X Fluor oder Chlor und n die Zahl 0, 1 oder 2 ist.

In der Formel (1a) sowie in den nachfolgenden Formeln haben die geschweiften Klammern die Bedeutung, dass die jeweilige Gruppe an einer der beiden von der geschweiften Klammer umfassten Positionen des Benzringes gebunden sein kann.

Aus der EP-A-0 099 721 sowie der EP-A-0 302 115 sind ähnliche Farbstoffe bekannt, welche jedoch nicht alle vorteilhaften Eigenschaften der erfindungsgemässen Farbstoffe aufweisen.

Als C₁-C₄-Alkyl kommt für R in Formel (1a) bzw. in der nachfolgenden Formel (1) z.B. Methyl, Aethyl, Propyl, Isopropyl, Butyl, tert.-Butyl, sek.-Butyl oder Isobutyl, insbesondere Methyl, in Betracht.

Als C₁-C₄-Alkoxy kommt für R in Formel (1a) bzw. in der nachfolgenden Formel (1) z.B. Methoxy, Aethoxy, Propoxy, Isopropoxy, Butoxy, tert.-Butoxy, sek.-Butoxy oder Isobutoxy, insbesondere Methoxy, in Betracht.

Als Halogen kommt für R in Formel (1a) bzw. in der nachfolgenden Formel (1) z.B. Fluor, Brom oder vorzugsweise Chlor in Betracht.

Bevorzugt sind Farbstoffe der Formel 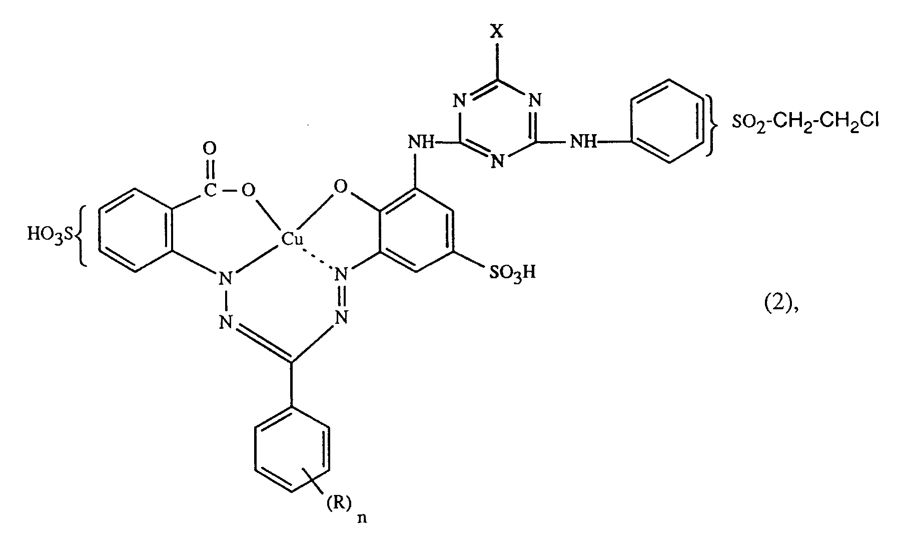
worin R, X und n die unter Formel (1a) angegebenen Bedeutungen haben.

Ebenfalls bevorzugt sind Farbstoffe der Formel (1a), worin n die Zahl 0 ist.

Ferner sind Farbstoffe der Formel (1a) oder (1b) bevorzugt, worin X Chlor ist.

Besonders bevorzugt sind Farbstoffe der Formel 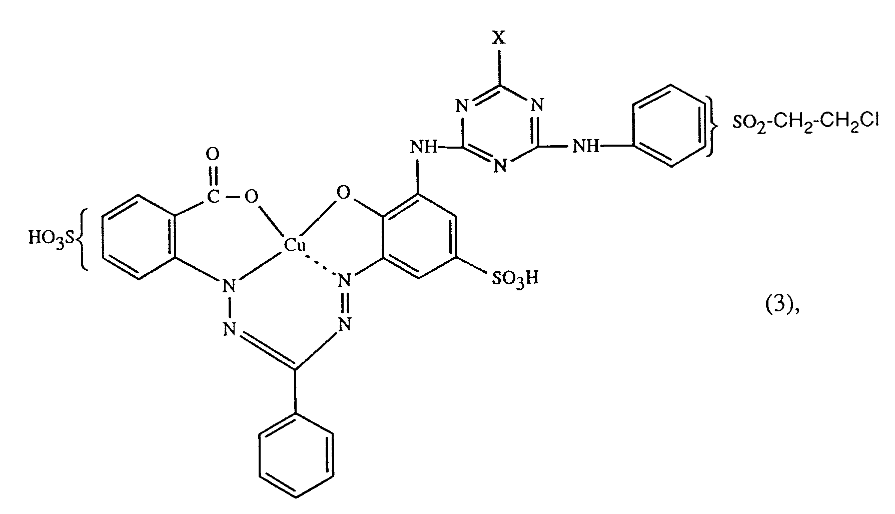
worin X Fluor oder insbesondere Chlor ist.

Gegenstand der Erfindung ist ferner ein Verfahren zur Herstellung der Farbstoffe der Formel (1), welches dadurch gekennzeichnet ist, dass man eine Verbindung der Formel 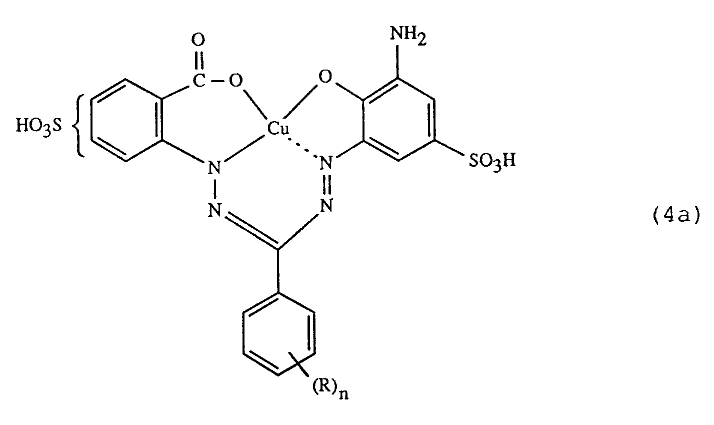
mit einer den Rest der Formel 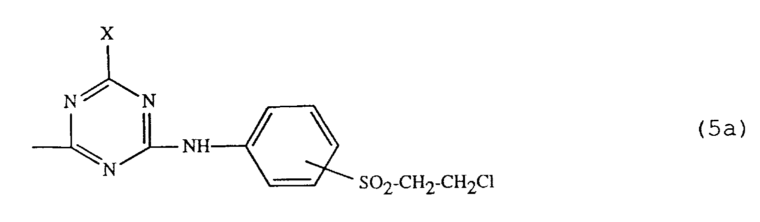
einführenden Verbindung umsetzt, oder eine Verbindung der Formel 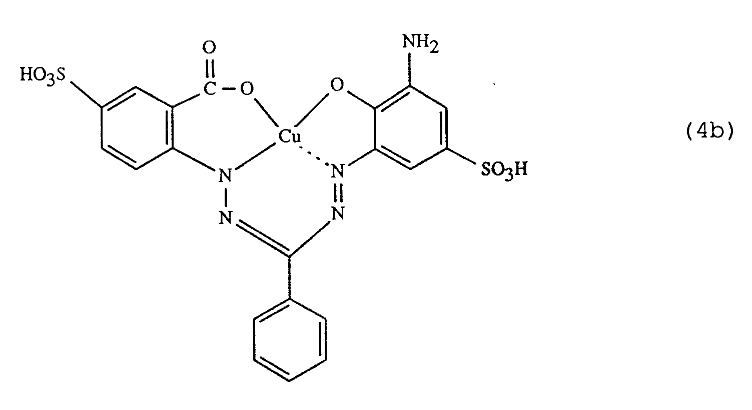
mit einer den Rest der Formel 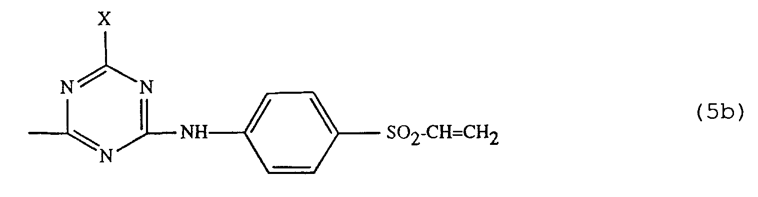
einführenden Verbindung umsetzt, wobei R, X und n die unter Formel (1a) angegebenen Bedeutungen haben.

Als den Rest der Formel (5a) bzw. (5b) einführende Verbindungen kommen vorzugsweise entsprechende Halogenide, insbesondere Chloride oder Fluoride, in Betracht. Als Beispiele seien genannt:

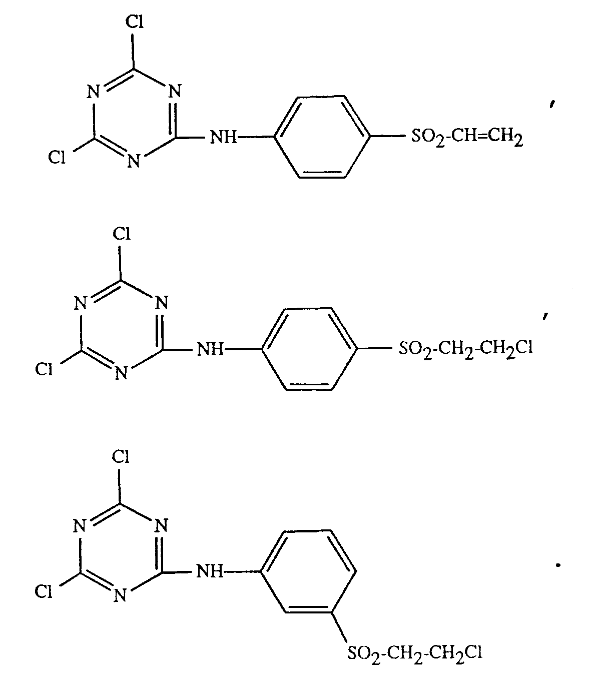

Eine Ausführungsform des erfindungsgemässen Verfahrens ist dadurch gekennzeichnet, dass man eine Verbindung der Formel (4b) mit einer den Rest der Formel 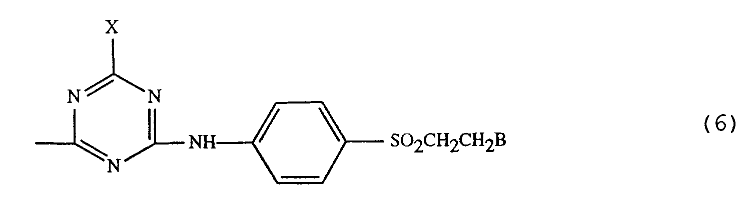
einführenden Verbindung umsetzt, wobei X Fluor oder insbesondere Chlor und B ein unter alkalischen Bedingungen abspaltbarer Rest ist, wie z.B. -OSO₃H, -SSO₃H, -OPO₃H₂, -S-CS-N(C₂H₅)₂, -N(CH₃)₂, -N(C₂H₅)₂, -OCOCH₃.

An die Herstellung dieser den Rest B enthaltenden Farbstoffe wird dann eine Eliminierungsreaktion angeschlossen. Beispielsweise kann man den Farbstoff, welcher den Rest B enthält, unter alkalischen Bedingungen, wie z.B. mit Natriumhydroxid, behandeln, wobei unter Abspaltung des Restes HB der Rest der Formel -SO₂-(CH₂)₂-B in den Rest -SO₂-CH=CH₂ übergeht.

Als den Rest der Formel (6) einführende Verbindungen kommen vorzugsweise entsprechende Halogenide, insbesondere Chloride oder Fluoride, in Betracht. Als Beispiel sei 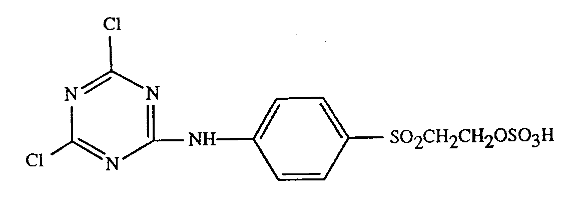
genannt.

Eine bevorzugte Ausführungsform des erfindungsgemässen Verfahrens ist dadurch gekennzeichnet, dass man eine Verbindung der Formel (4a) oder (4b) zunächst mit einer Verbindung der Formel 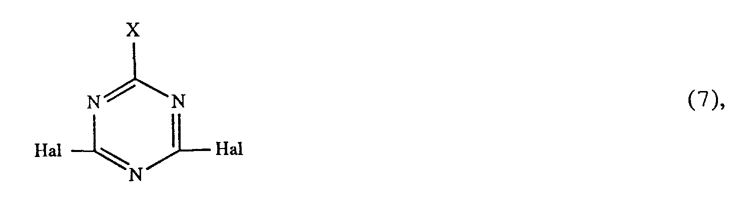
worin X Fluor oder Chlor und Hal je Halogen, insbesondere Fluor oder Chlor, bedeutet, kondensiert, und das Kondensationsprodukt aus der Verbindung der Formel (4a) und der Verbindung der Formel (7) anschliessend mit einer den Rest der Formel 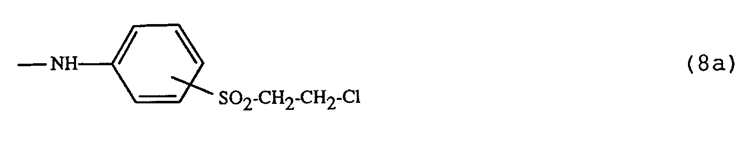
einführenden Verbindung umsetzt, oder
das Kondensationsprodukt aus der Verbindung der Formel (4b) und der Verbindung der Formel (7) anschliessend mit einer den Rest der Formel 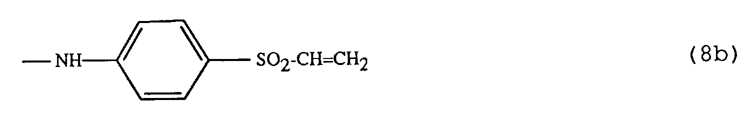
einführenden Verbindung umsetzt.

Als Beispiele für Verbindungen der Formel (7) seien Cyanurfluorid und Cyanurchlorid genannt. Als Beispiele für den Rest der Formel (8a) einführende Verbindungen seien 3- oder 4-(β-Chloräthylsulfonyl)anilin und als Beispiel für den Rest der Formel (8b) einführende Verbindungen sei 4-Vinylsulfonylanilin genannt.

Eine weitere bevorzugte Ausführungsform des erfindungsgemässen Verfahrens ist dadurch gekennzeichnet, dass man eine Verbindung der Formel (4b) zunächst mit einer Verbindung der Formel (7) kondensiert, das Kondensationsprodukt anschliessend mit einer den Rest der Formel 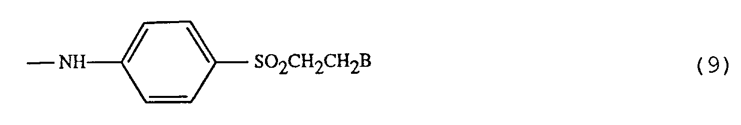
einführenden Verbindung, worin B die unter Formel (6) angegebenen Bedeutungen hat, umsetzt und anschliessend den Rest -SO₂CH₂CH₂B in den Rest -SO₂CH=CH₂ umwandelt. Als Beispiel für den Rest der Formel (9) einführende Verbindungen sei 4-(β-Sulfatoäthylsulfonyl)-anilin genannt.

Die Umwandlung des Restes -SO₂CH₂CH₂B in den Rest -SO₂CH=CH₂ verläuft unter den oben angegebenen alkalischen Bedingungen.

Die Umsetzung der Verbindung der Formel (4a) mit der den Rest der Formel (5a) einführenden Verbindung, die Umsetzung der Verbindung der Formel (4b) mit der den Rest der Formel (5b) oder der den Rest der Formel (6) einführenden Verbindung bzw. die Kondensation der Verbindung der Formel (4a) oder (4b) mit der Verbindung der Formel (7) und die anschliessende Umsetzung des Kondensationsproduktesmit der den Rest der Formel (8a), (8b) oder der den Rest der Formel (9) einführenden Verbindung erfolgt vorzugsweise in wässriger Lösung, Emulsion oder Suspension, bei niedriger Temperatur, z.B. 0 bis 40°C, und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert.

Bevorzugt verwendet man für das erfindungsgemässe Verfahren Verbindungen der Formel (4a), worin n die Zahl 0 ist.

Eine bevorzugte Ausführungsform des erfindungsgemässen Verfahrens ist dadurch gekennzeichnet, dass man als Verbindung der Formel (5a) eine Verbindung der Formel 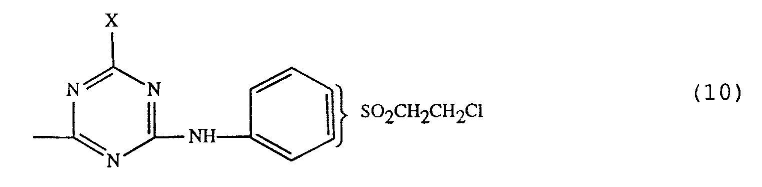
oder als Verbindung der Formel (8a) eine Verbindung der Formel 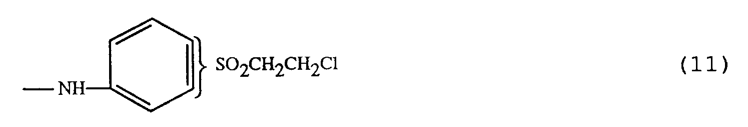
verwendet, wobei X die unter den Formeln (1a) und (1b) angegebenen Bedeutungen hat.

Eine weitere bevorzugte Ausführungsform des erfindungsgemässen Verfahrens ist dadurch gekennzeichnet, dass man eine den Rest der Formel (5a), (5b) oder (6) einführende Verbindung verwendet, worin X Chlor ist.

Als Verbindung der Formel (7) verwendet man bevorzugt Cyanurchlorid.

Eine besonders bevorzugte Ausführungsform des erfindungsgemässen Verfahrens zur Herstellung der Farbstoffe der Formel (3) ist dadurch gekennzeichnet, dass man eine Verbindung der Formel 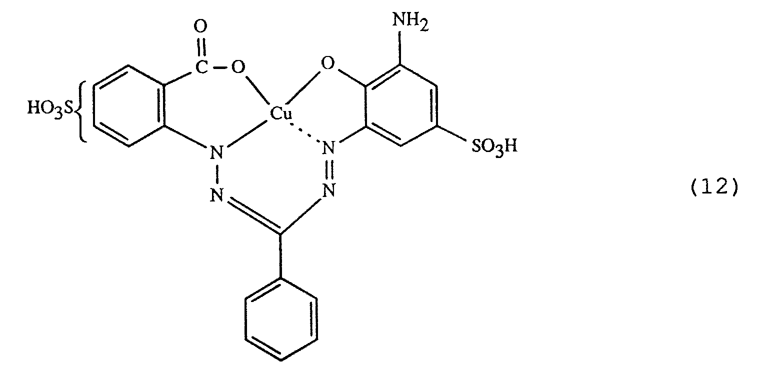
mit Cyanurchlorid oder Cyanurfluorid kondensiert und das Kondensationsprodukt anschliessend mit einer den Rest der Formel (11) einführenden Verbindung umsetzt.

Eine ganz besonders wichtige Ausführungsform des erfindungsgemässen Verfahrens zur Herstellung der Farbstoffe der Formel (3) ist dadurch gekennzeichnet, dass man eine Verbindung der Formel (12) mit einer den Rest der Formel (10) einführenden Verbindung, worin X die unter Formel (3) angegebenen Bedeutungen hat, umsetzt.

Die Verbindungen der Formel (4a) und (4b) sind an sich bekannt oder können in Analogie zu bekannten Verbindungen hergestellt werden. Zur Herstellung der Kupferkomplexe der vierzähnigen Formazane sei auf K. Venkataraman, The Chemistry of Synthetic Dyes, Volume VI, Seiten 287 bis 297, Academic Press New York und London (1972) und Ullmanns Encyklopädie der technischen Chemie, Band 11, Seiten 714 bis 718, Verlag Chemie (1976) verwiesen.

Die den Rest der Formel (5a), (5b), (6), (8a), (8b) oder (9) einführenden Verbindungen sowie die Verbindungen der Formel (7) sind ebenfalls an sich bekannt oder können in Analogie zu bekannten Verbindungen hergestellt werden.

Die Farbstoffe der Formel (1a) oder (1b) eignen sich zum Färben und Bedrucken der verschiedensten Fasermaterialien, insbesondere textiler Fasermaterialien, vorzugsweise hydroxylgruppen- oder stickstoffhaltige Textilmaterialien, wie z.B. Seide, Fasermaterialien aus Cellulose und insbesondere Wolle, synthetische Polyamidfasermaterialien, wie z.B. Polyamid-6 und Polyamid-6,6 und Leder und Papier. Man erhält mit den Farbstoffen der Formeln (1a) oder (1b) egale Färbungen in blauen Tönen mit guten Allgemeinechtheiten, insbesondere guter Nassechtheit, wie z.B. Nassreibechtheit und guter Lichtechtheit. Ferner sind die Farbstoffe der Formeln (1a) oder (1b) sehr gut mit anderen Reaktivfarbstoffen kombinierbar. Das oben genannte Textilmaterial kann in den verschiedensten Verarbeitungsformen vorliegen, wie z.B. als Garn, Gewebe oder Gewirke.

Hervorzuheben ist, dass die erfindungsgemässen Farbstoffe der Formeln (1a) oder (1b) eine hohe Reduktionsstabilität, ein gutes Aufziehverhalten und gute Fixiergeschwindigkeit sowie eine hohe Faseregalität aufweisen und keinen Dichroismus zeigen.

Die erfindungsgemässen Farbstoffe der Formeln (1a) oder (1b), welche zwei Sulfonsäuregruppen enthalten, liegen entweder in der Form ihrer freien Säure oder vorzugsweise als deren Salze vor. Als Salze kommen beispielsweise Alkali-, Erdalkali- oder Ammoniumsalze oder die Salze eines organischen Amins in Betracht. Als Beispiel seien die Natrium-, Lithium-, Kalium- oder Ammoniumsalze oder das Salz des Triäthanolamins genannt.

Hervorzuheben ist ferner für die erfindungsgemässen Farbstoffe deren Eignung zum Trichromie-Färben und -Bedrucken von natürlichen oder synthetischen Polyamidfasermaterialien zusammen mit einem faserreaktiven gelb- oder orangefärbenden Farbstoff und einem faserreaktiven rotfärbenden Farbstoff.

Unter Trichromie ist die additive Farbmischung passend gewählter gelb- bzw. orange-, rot- und blaufärbender Farbstoffe zu verstehen, mit denen praktisch jede gewünschte Nuance des sichtbaren Farbspektrums durch geeignete Wahl der Mengenverhältnisse eingestellt werden kann.

Die in dem Trichromie-Verfahren zu verwendenden Farbstoffe sollen einen gleichmässigen Farbaufbau bei gleichzeitiger Nuancenkonstanz in verschiedenen Konzentrationen und eine gute Kombinierbarkeit zeigen.

Gegenstand der Erfindung ist auch ein Verfahren zum Trichromie-Färben oder -Bedrucken von natürlichen und synthetischen Polyamidfasermaterialien mit Farbstoffmischungen faserreaktiver Farbstoffe, welches dadurch gekennzeichnet ist, dass man einen blaufärbenden Farbstoff der Formel 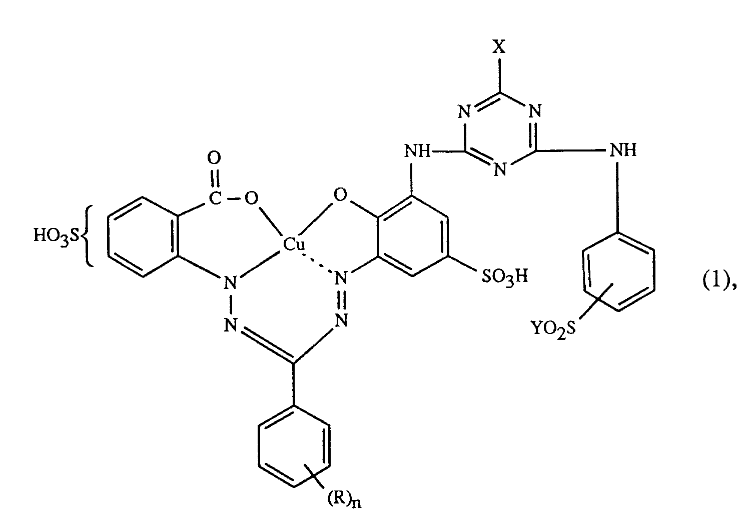
worin R C₁-C₄-Alkyl, C₁-C₄-Alkoxy, Halogen, Cyan oder Nitro, X Fluor oder Chlor, Y β-Chloräthyl oder Vinyl und n die Zahl 0, 1 oder 2 ist, zusammen mit einem faserreaktiven, sulfogruppenhaltigen gelb- oder orangefärbenden Farbstoff und einen faserreaktiven, sulfogruppenhaltigen rotfärbenden Farbstoff verwendet.

Insbesondere werden faserreaktive, sulfogruppenhaltige gelb- oder orange- und rotfärbende Azofarbstoffe verwendet, die als faserreaktive Gruppe vorzugsweise eine Halogentriazin- oder Halogenpyrimidingruppe oder eine Gruppe der aliphatischen Reihe enthalten.

Als Halogenpyrimidingruppe oder Gruppe der aliphatischen Reihe werden vorzugsweise als faserreaktive Gruppe Difluorchlorpyrimidinyl, insbesondere 2,4-Difluor-5-chlorpyrimidinyl, oder α,β-Dihalogenpropionyl, insbesondere α,β-Dibrompropionyl, oder α-Halogenacryloyl, insbesondere α-Bromacryloyl, verwendet.

Als gelb- oder orangefärbende, sulfogruppenhaltige, faserreaktive Farbstoffe kommen z.B. die folgenden in Betracht: 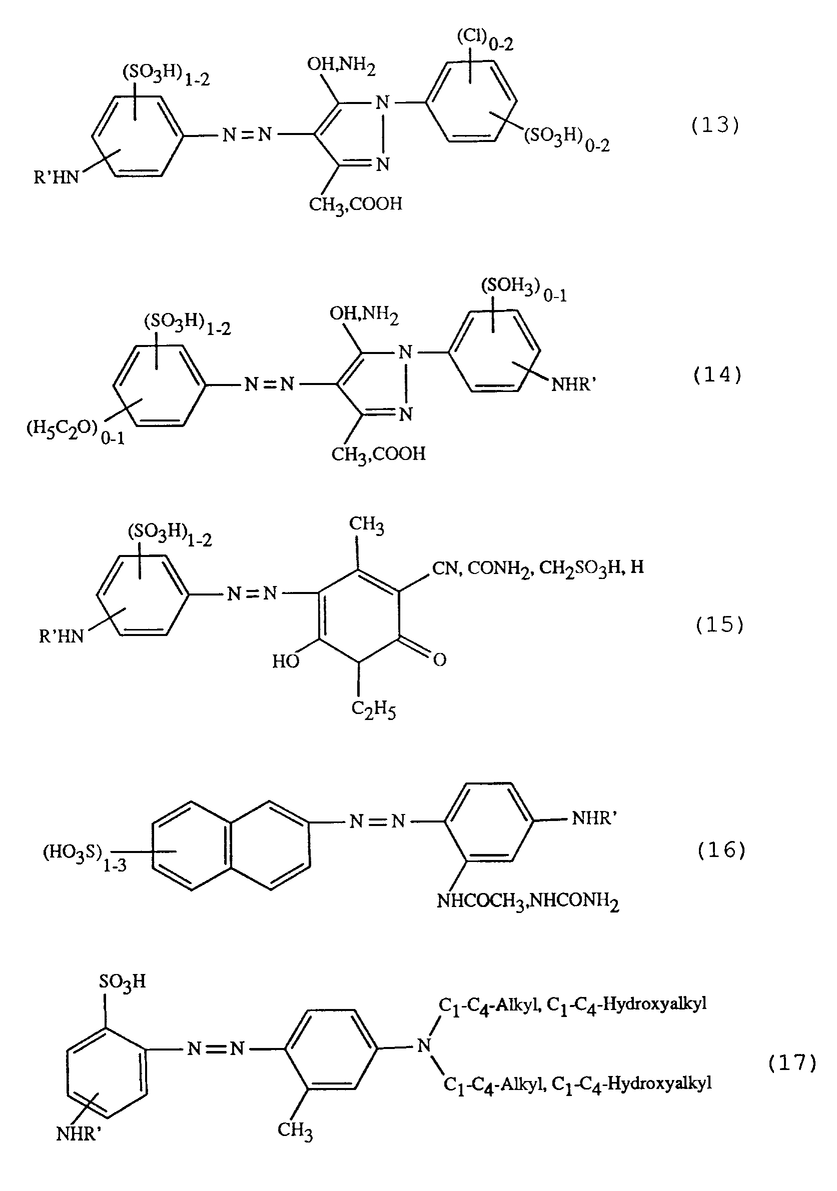 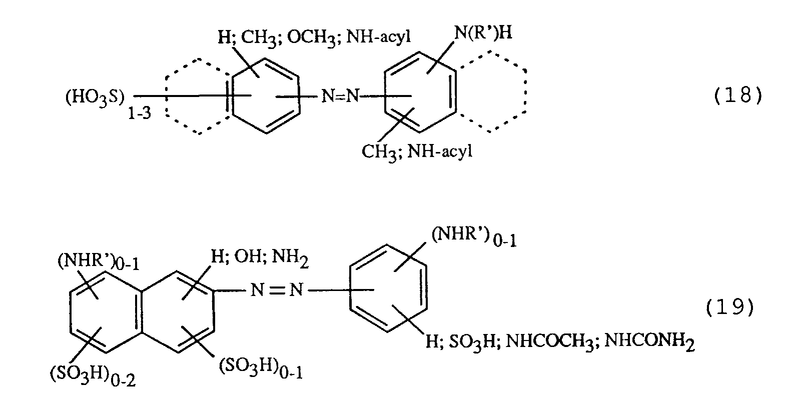
Als rotfärbende, sulfogruppenhaltige, faserreaktive Farbstoffe kommen z.B. die folgenden in Betracht: 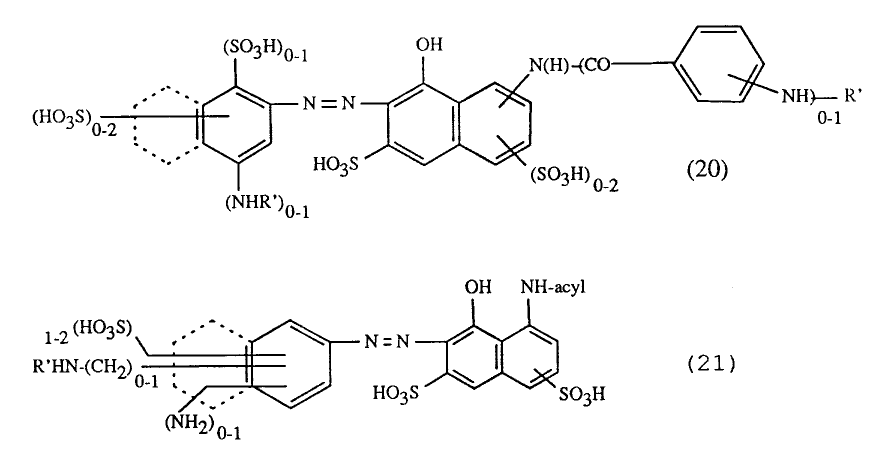
worin acyl z.B. Acetyl oder gegebenenfalls substituiertes Benzoyl ist.

Die durch Punkte angedeuteten kondensierten Ringe stehen für alternativ mögliche Napthalinsysteme. 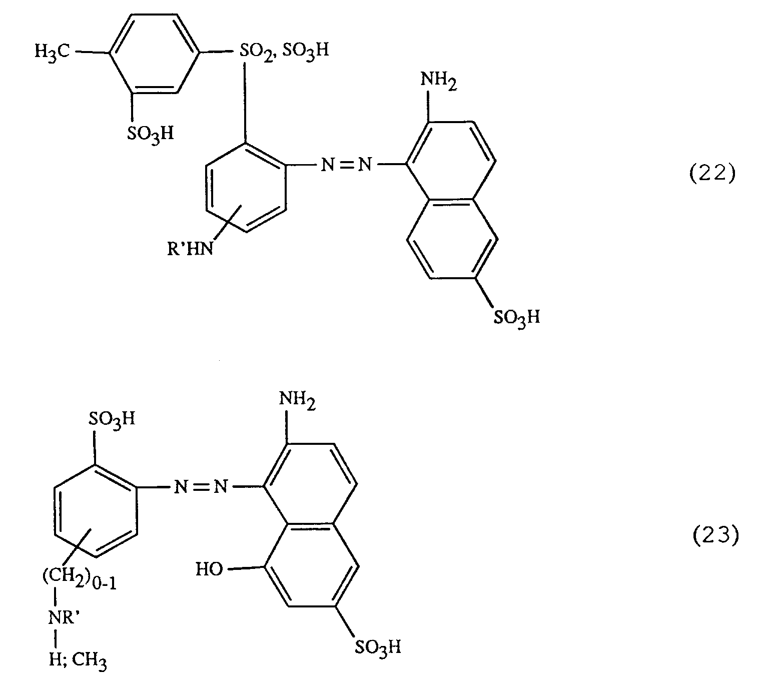
In den vorstehenden Formeln bedeutet R' einen faserreaktiven Rest, insbesondere einen faserreaktiven Rest der Halogentriazin- oder der Halogen-Pyrimidinreihe oder der aliphatischen Reihe, vorzugsweise bedeutet R' Difluorchlorpyrimidinyl oder α,β-Dihalogenpropionyl oder α-Bromacryloyl. Besonders bevorzugt ist R' 2,4-Difluor-5-chlorpyrimidin-6-yl oder α,β-Dibrompropionyl oder α-Bromacryloyl.

In dem erfindungsgemässen Verfahren zum Trichromie-Färben oder -Bedrucken von natürlichen und synthetischen Polyamidfasermaterialien werden als blaufärbende Farbstoffe die obengenannten, insbesondere diejenigen der Formel (3) undganz besonders bevorzugt die Farbstoffe der Formel (3) verwendet, worin X Chlor ist.

Als besonders bevorzugte gelb- oder orangefärbende Farbstoffe kommen in Betracht: 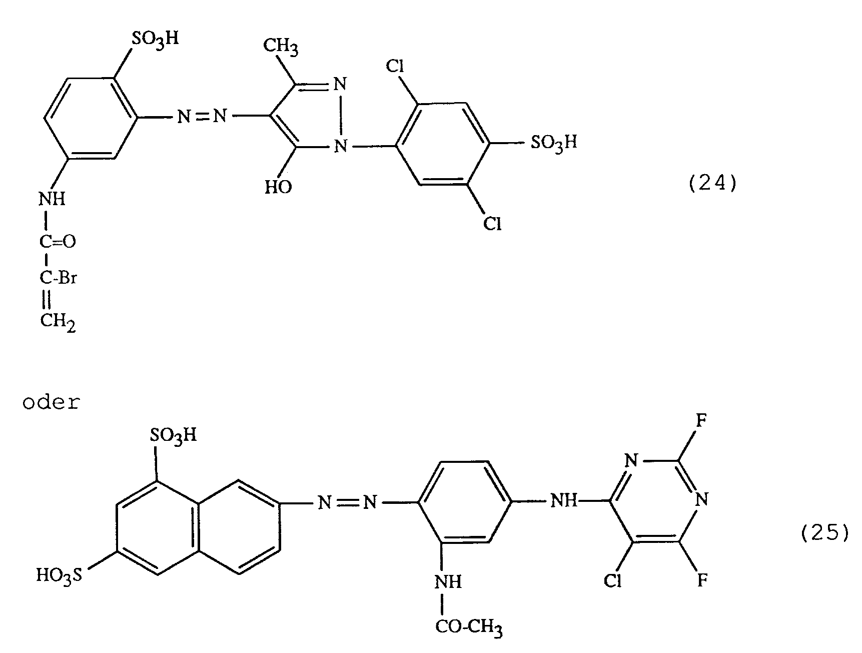
Als besonders bevorzugte rotfärbende Farbstoffe kommen in Betracht: 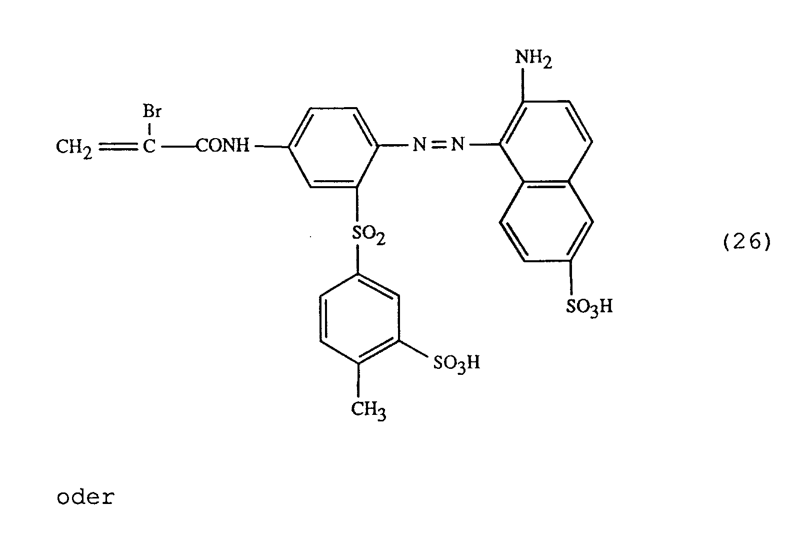 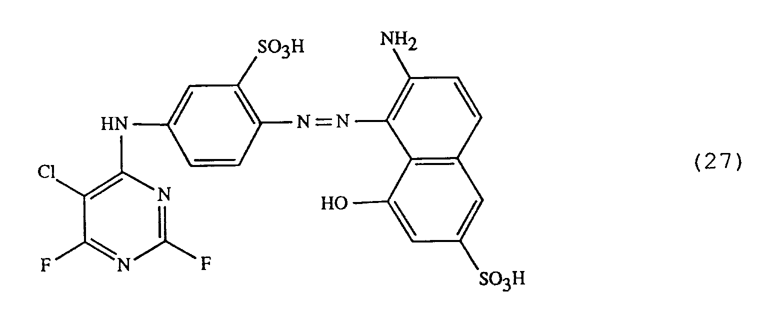
Ein weiterer Gegenstand der Erfindung sind Trichromie-Farbstoffmischungen, welche dadurch gekennzeichnet sind, dass sie einen blaufärbenden Farbstoff der Formel (1) zusammen mit einem gelb- oder orangefärbenden sulfogruppenhaltigen Reaktivfarbstoff und einem rotfärbenden sulfogruppenhaltigen Reaktivfarbstoff enthalten, wobei für den blaufärbenden Farbstoff der Formel (1), den gelb- oder orangefärbenden sulfogruppenhaltigen Reaktivfarbstoff und den rotfärbenden sulfogruppenhaltigen Reaktivfarbstoff die zuvor angegebenen Bedeutungen und Bevorzugungen gelten.

Die in dem erfindungsgemässen Verfahren zum Trichromie-Färben oder -Bedrucken und in den erfindungsgemässen Trichromie-Farbstoffmischungen verwendeten gelb- bzw. orange- und rotfärbenden Farbstoffe sind bekannt oder können in Analogie zu bekannten Farbstoffen hergestellt werden. Die Farbstoffe liegen entweder in der Form ihrer freien Sulfonsäure oder vorzugsweise als deren Salz vor, wobei die gleichen Salze wie für die Farbstoffe der Formel (1) angegeben verwendet werden können.

Die Mengen, in denen die Farbstoffe der Formel (1) und die gelb- bzw. orange- und rotfärbenden faserreaktiven Farbstoffe in den Färbebädern oder Druckpasten verwendet werden, können je nach der gewünschten Farbtiefe in weiten Grenzen schwanken, im allgemeinen haben sich Mengen von 0,01 bis 10 Gewichtsprozent, insbesondere 2 bis 10 Gewichtsprozent, bezogen auf das Färbegut, bzw. die Druckpaste, als vorteilhaft erwiesen.

Vorzugsweise wird in dem erfindungsgemässen Verfahren Fasermaterial aus natürlichen Polyamiden, insbesondere Wolle, verwendet.

Besondere Vorrichtungen sind beim erfindungsgemässen Verfahren nicht erforderlich. Es können die üblichen Färbe- und Druckapparate und -maschinen, beispielsweise für Flocke, Kammzug, Stranggarn, Wickelkörper, Stückware und Teppiche verwendet werden.

Die wässrigen Färbebäder können neben dem Reaktivfarbstoff noch Hilfsmittel, insbesondere Egalisierhilfsmittel, enthalten. Die Egalisierhilfsmittel werden in einer Menge von 0,3 bis 3 Gewichtsprozent, bezogen auf das Fasermaterial, verwendet.

Als weitere Hilfsmittel können die Färbebäder Mineralsäuren, wie Schwefelsäure, Sulfaminsäure oder Phosphorsäure, organische Säuren, zweckmässig niedere, aliphatische Carbonsäuren, wie Ameisensäure, Essigsäure oder Maleinsäure, enthalten. Die Säuren dienen vor allem der Einstellung des pH-Wertes der erfindungsgemäss verwendeten Flotten.

Vorzugsweise erfolgt die Einstellung des pH-Wertes von 3 bis 6 mit einer organischen Säure, insbesondere Ameisensäure oder Essigsäure.

Vorzugsweise färbt man bei einem pH-Wert von 4 bis 6, insbesondere 4,2 bis 5,5.

Ferner kann die Färbeflotte verschiedene Salze, insbesondere Ammoniumsalze oder Alkalisalze, wie z.B. Ammoniumsulfat oder Natriumsulfat als Hilfsmittel enthalten.

Das Flottenverhältnis kann innerhalb eines weiten Bereichs gewählt werden, von 1:6 bis 1:80, vorzugsweise 1:10 bis 1:50.

Das Färben erfolgt aus wässriger Flotte nach dem Ausziehverfahren z.B. bei einer Temperatur zwischen 80 und 105°C bzw. 110°C bei Verwendung eines Formaldehyd-abspaltenden Wollschutzmittels, vorzugsweise zwischen 98° und 103°C.

Die Färbedauer beträgt in der Regel 30 bis 90 Minuten.

Eine besonders bevorzugte Ausführungsform des erfindungsgemässen Verfahrens ist dadurch gekennzeichnet, dass man nach dem Färben bei vorzugsweise 98 bis 103°C die Färbeflotte abkühlen lässt auf ca. 75° bis 90°C und den pH-Wert auf 8 bis 9, vorzugsweise auf ca. 8,5, einstellt. Die Einstellung des pH-Wertes kann mit üblichen Mitteln erfolgen, z.B. Alkalihydroxidlösungen sowie insbesondere mit wässriger Ammoniaklösung üblicher Konzentration, z.B. 25 Gewichtsprozent Ammoniak enthaltend.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 13,24 Teile des Chromophors der Formel 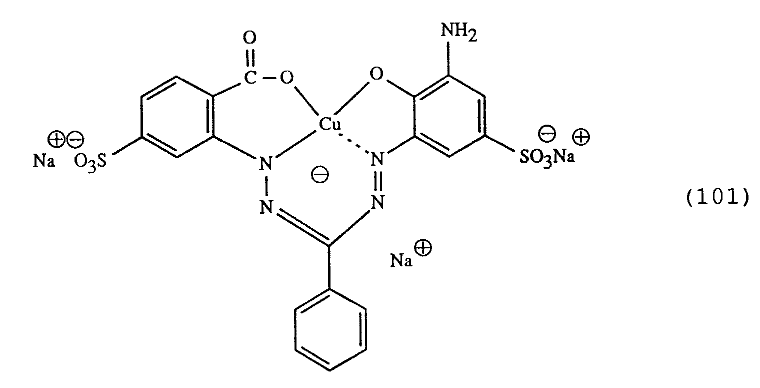
werden in 200 Teilen Wasser aufgenommen, mit 0,6 Teilen Dinatriumhydrogenphosphat versetzt und auf 40° erwärmt, wobei nach Zugabe von Natronlauge bis zum pH-Wert 6,5 eine klare Lösung entsteht. Nach Kühlung auf 0 bis 2° wird eine Lösung von 3,9 Teilen Cyanurchlorid in 25 Teilen Aceton innerhalb von 2 bis 3 Minuten zugetropft, wobei der pH mit Natronlauge bei einem Wert von 6,25 gehalten wird.

Nach beendeter Umsetzung wird eine Lösung von 5,27 Teilen 4-(2'-Chloräthylsulfonyl)anilin in 20 Teilen Aceton innert 5 Minuten bei 0 bis 5° zugetropft. Der pH-Wert wird dabei mit Natronlauge konstant bei 6,25 gehalten. Nach Ausrühren über Nacht wird der Farbstoff abgenutscht, mit Natriumchlorid-Lösung gewaschen und bei 60 bis 70° getrocknet. Man erhält 22,4 Teile eines Farbstoffs, der der Formel (102) entspricht. 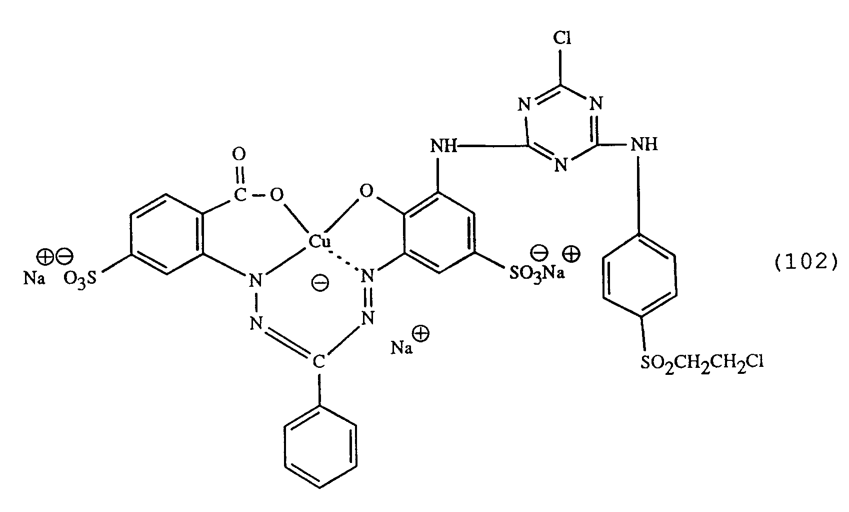
Der Farbstoff der Formel (102) färbt Wolle in echten blauen Farbtönen.

Beispiel 2: Wenn man wie in Beispiel 1 angegeben verfährt, jedoch anstelle von 5,27 Teilen 4-(2'-Chloräthylsulfonyl)anilin eine äquimolare Menge 3-(2'-Chloräthylsulfonyl)anilin verwendet, so erhält man 22,6 Teile eines Farbstoffs, der der Formel (103) entspricht. 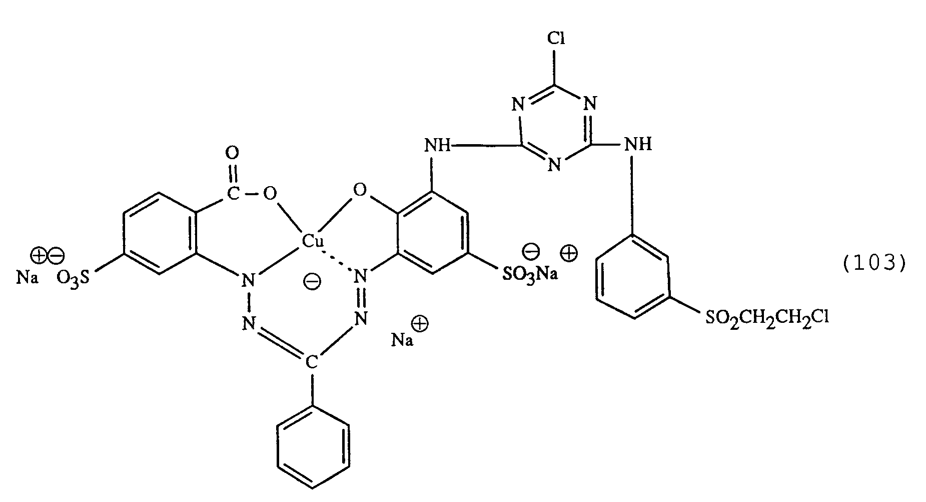
Der Farbstoff der Formel (103) färbt Wolle in echten blauen Farbtönen.

Beispiel 3: Wenn man wie in Beispiel 1 angegeben verfährt, jedoch anstelle 13,24 Teilen des Chromphors der Formel (101) eine äquimolare Menge des Chromophors der Formel 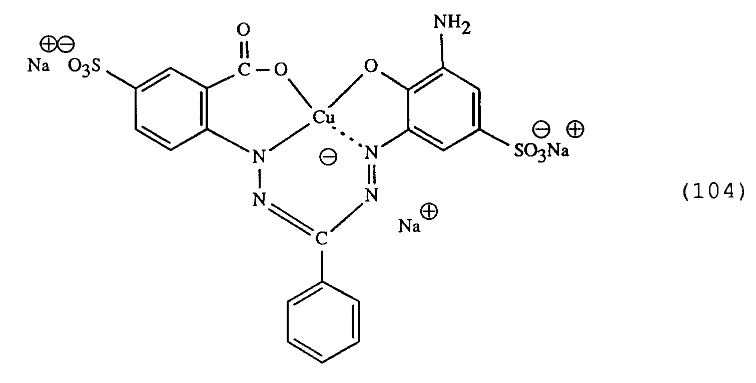
verwendet, so erhält man 21,4 Teile eines Farbstoffs, der der Formel (105) entspricht. 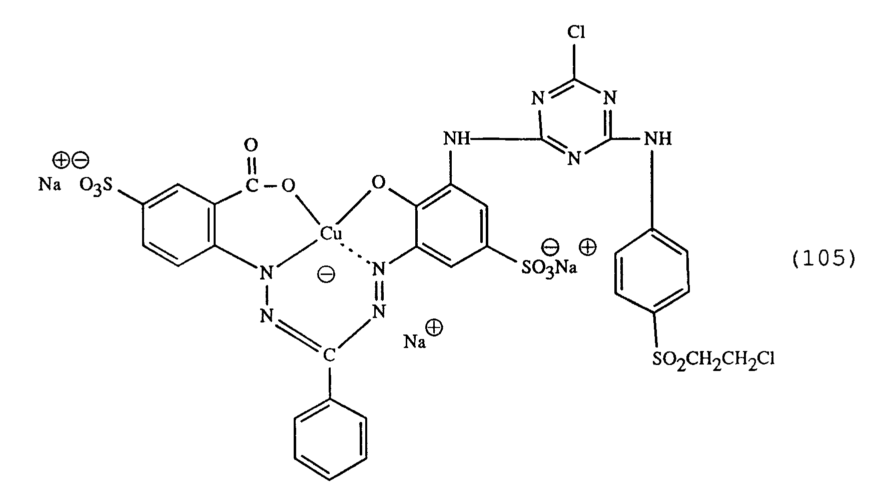
Der Farbstoff der Formel (105) färbt Wolle in echten blauen Farbtönen.

Beispiel 4: Wenn man wie in Beispiel 1 angegeben verfährt, jedoch anstelle 13,24 Teilen des Chromophors der Formel (101) 16,6 Teile des Chromophors der Formel (104) aus Beispiel 3 und anstelle von 5,27 Teilen 4-(2'-Chloräthylsulfonyl)anilin 6,6 Teile 3-(2'-Chloräthylsulfonyl)anilin verwendet, so erhält man 27,8 Teile eines Farbstoffes, der der Formel (106) entspricht. 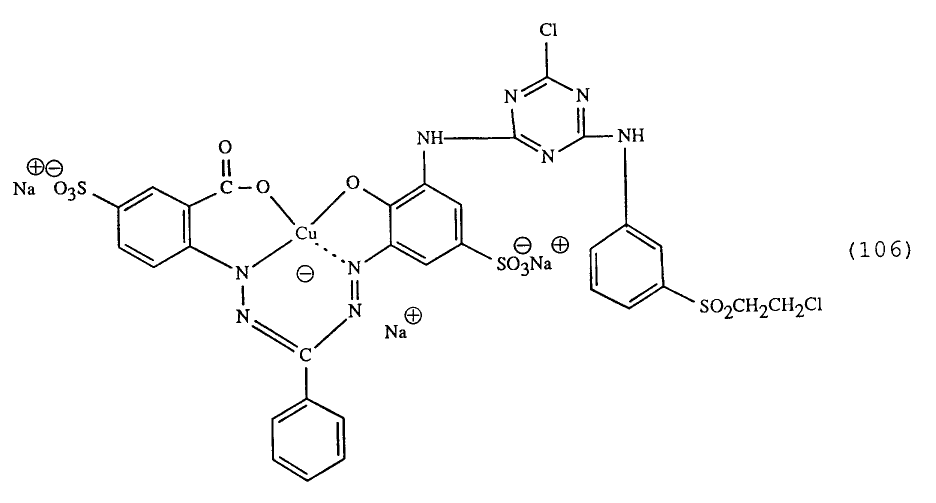
Der Farbstoff der Formel (106) färbt Wolle in echten blauen Farbtönen.

Beispiel 5: 2,2 Teile 4-(2'-Chloräthylsulfonyl)anilin werden in einer Mischung von 25 Teilen Aceton und 25 Teilen Wasser gelöst. Nach Kühlung auf 0 bis 2° werden 1,49 Teile Cyanurfluorid innerhalb von 1 bis 2 Minuten zugetropft, wobei der pH durch Zugabe von Natronlauge bei 6 bis 6,5 gehalten wird. Nach beendeter Kondensation lässt man bei 5° innerhalb von 10 Minuten eine Lösung aus 5,96 Teilen des Chromophors der Formel (104) in 50 Teilen Wasserzutropfen, wobei der pH-Wert mit Natronlauge bei 6,25 gehalten wird. Nach Ausrühren bei Raumtemperatur und Zugabe von Natriumchlorid wird der Farbstoff abgenutscht, mit Natriumchlorid-Lösung gewaschen und bei 60 bis 70° getrocknet. Man erhält 5,0 Teile eines Farbstoffes, der der Formel (107) entspricht. 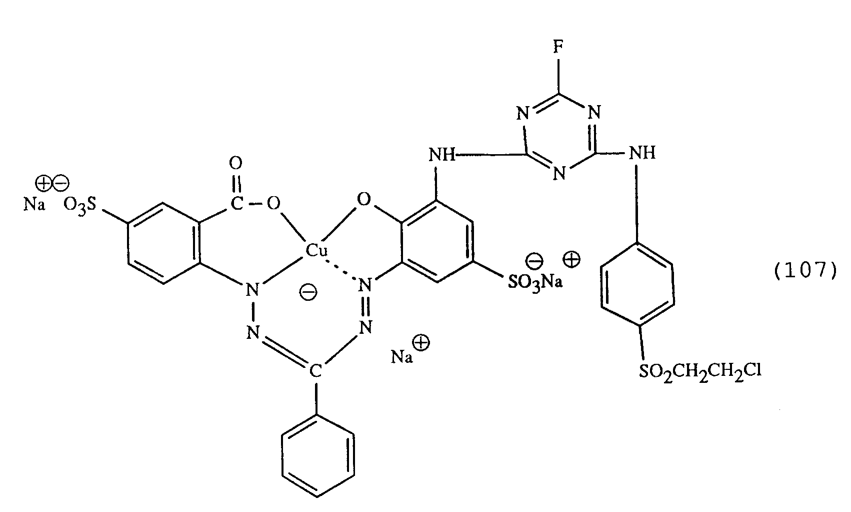
Der Farbstoff der Formel (107) färbt Wolle in echten blauen Farbtönen.

Beispiel 6: Wenn man wie in Beispiel 5 angegeben verfährt, jedoch anstelle von 2,2 Teilen 4-(2'-Chloräthylsulfonyl)anilin, die in 25 Teilen Wasser und 25 Teilen Aceton gelöst sind, 6,6 Teile 3-(2'-Chloräthylsulfonyl)anilin, die in 25 Teilen Aceton gelöst sind, und statt 5,96 Teilen des Chromophors der Formel (104) 16,6 Teile dieses Chromophors verwendet, so erhält man 22,9 Teile eines Farbstoffes, der der Formel (108) entspricht. 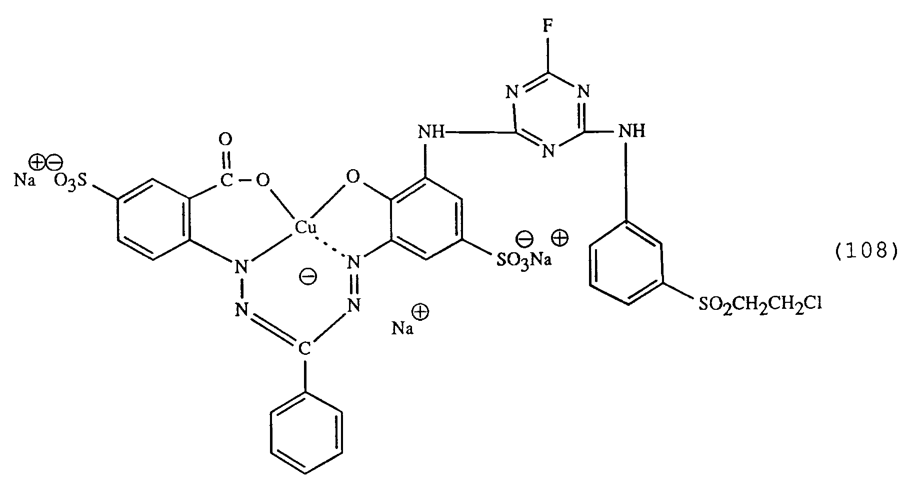
Der Farbstoff der Formel (108) färbt Wolle in echten blauen Farbtönen.

Beispiel 7: 2,81 Teile 4-(2'Sulfatoäthylsulfonyl)anilin werden in 42 Teilen Wasser aufgenommen und bei Raumtemperatur mit Natronlauge bei einem pH-Wert von 6,5 in Lösung gebracht. Nach Kühlung auf 0 bis 2° werden 1,49 Teile Cyanurfluorid innerhalb von 1 bis 2 Minuten zugetropft, wobei der pH durch Zugabe von Natronlauge bei 6 bis 6,5 gehalten wird. Nach beendeter Kondensation lässt man bei 5° innerhalb von 10 Minuten eine Lösung aus 5,96 Teilen des Chromophors der Formel (104) in 50 Teilen Wasser zutropfen, wobei der pH-Wert mit Natronlauge bei 6,25 gehalten wird. Nach Ausrühren bei Raumtemperatur und Zugabe von Natriumchlorid wird die erhaltene Verbindung abgenutscht, mit Natriumchlorid-Lösung gewaschen und bei 60 bis 70° getrocknet. 5 Teile der so erhaltenen Verbindung werden in 50 Teilen Wasser gelöst, mit Natronlauge auf pH 10 gestellt und 20 Stunden bei Raumtemperatur gerührt. Anschliessend wird mit Salzsäure auf einen pH-Wert von 7 gestellt und der erhaltene Farbstoff abgenutscht. Nach Waschen mit Natriumchlorid-Lösung und Trocknen bei 60 bis 70° erhält man 3,3 Teile eines Farbstoffes, der der Formel (109) entspricht. 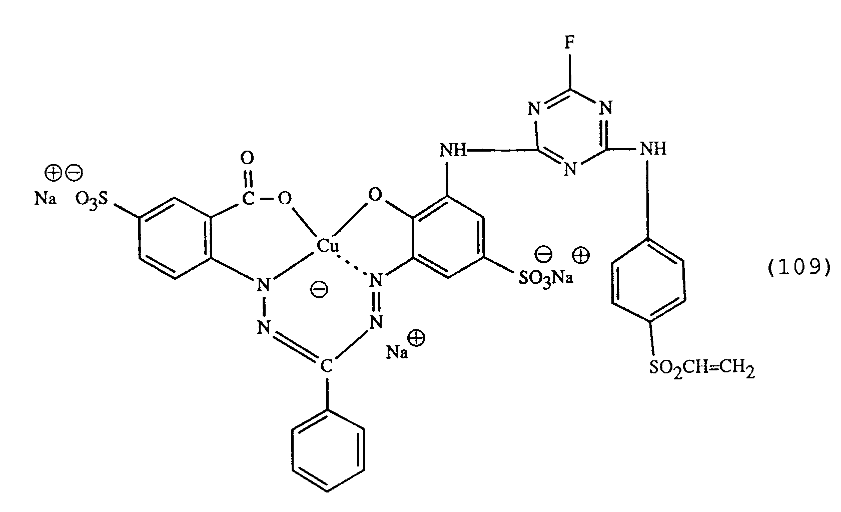
Der Farbstoff der Formel (109) färbt Wolle in echten blauen Farbtönen.

### Färbebeispiel 1

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

4 Teile des gemäss Beispiel 1 erhaltenen Farbstoffes werden in 100 Teilen Wasser heiss gelöst und dem obigen Färbebad zugegeben. Dann wird mit 100 Teilen vorgenetzten Wollstrickgarns eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Badesauf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Ansäuern mit 1 Teil 80%iger Ameisensäure, Zentrifugieren und Trocknen erhält man ein dunkelblau gefärbtes Wollgarn von sehr guter Nass- und Reibechtheit sowie ausgezeichneter Lichtechtheit.

### Färbebeispiel 2

Ein filzfest ausgerüstetes Wollgewebe wird mit der nachfolgend beschriebenen Zubereitung getränkt und auf dem Foulard auf eine Feuchtigkeitsaufnahme von 250 % abgequetscht.
4 Teile Diaprint REG® (säurebeständiges Verdickungsmittel),
1 Teil Sulfaminsäure
0,2 Teile Thymol
0,2 Teile Emulgator
94,6 Teile Wasser
1̅0̅0̅ T̅e̅i̅l̅e̅
Das imprägnierte Material wird anschliessend in einer heizbaren Presse während 3 Minuten bei 100 bis 105° unter einem Druck von etwa 0,5 kg/cm² mit einem Transferpapier zusammengepresst, welches ein in üblicher Weise mit dem Farbstoff gemäss Beispiel 2 aufgebrachtes Druckmuster trägt. Nach Spülen und Trocknen des Wollgewebes weist dieses ein entsprechendes, blaues Druckmuster von sehr guten Echtheitseigenschaften auf.

### Färbebeispiel 3

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht:
50 Teile des Farbstoffes gemäss Beispiel 3
300 Teile Solvitose OFA® à 40 % (Verdickungsmittel)
20 Teile einer Mischung von anionaktivem Fettalkoholäthersulfat mit nichtionogenen Netzmitteln
10 Teile des in Färbebeispiel 1 verwendeten Egalisiermittels
20 Teile Essigsäure 80%ig
600 Teile Wasser
1̅0̅0̅0̅ T̅e̅i̅l̅e̅ Foulardierflotte.

Das imprägnierte Gewebe wird anschliessend in einen Dämpfer gebracht und während 20 bis 40 Minuten mit gesättigtem Dampf behandelt. Nach Spülen mit kaltem Wasser wird das Material auf frischem Bad mit soviel 24%iger Ammononiaklösung behandelt, dass ein pH-Wert von 8,5 erreicht wird und während 15 Minuten bei 80° gehalten. Nach Spülen in warmem Wasser wird zum Schluss mit Essigsäure 80%ig abgesäuert und getrocknet. Das Wollgewebe ist in einem vollen Blauton von ausgezeichneten Echtheitseigenschaften gefärbt.

### Färbebeispiel 4

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45% Octadecenylamin und 7 Mol Aethylenoxid) sowie 4 Teile Ammoniumsulfat gelöst.

3 Teile des gemäss Beispiel 1 erhaltenen Farbstoffes werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht, und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein dunkelblau gefärbtes Färbegut von sehr guter Nassechtheit sowie ausgezeichneter Lichtechtheit.

### Färbebeispiel 5

In 1000 Teilen Wasser von 50° werden nacheinander 6 Teile 80%ige Essigsäure, 3 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 6 Teile Ammoniumsulfat gelöst.

3 Teile des gemäss Beispiel 5 erhaltenen Farbstoffes werden in 100 Teilen Wasser heiss gelöst und dem obigen Färbebad zugegeben. Ein Zirkulationsfärbeapparat wird mit 150 Teilen vorgenetzter loser Wolle beschickt und im Verlaufe von 30 Minuten die Temperatur der Flotte von 50° auf 97-99° erhöht, und anschliessend 90 Minuten kochend gefärbt. Der Farbstoff zieht fast vollkommen auf das Substrat auf. Nach Abkühlen der Flotte auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein faseregal blau gefärbtes Substrat mit guter Nass- und Reibechtheit sowie ausgezeichneter Lichtechtheit.

### Färbebeispiel 6

In 4000 Teilen Wasser von 50° werde nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,45 Teile des gemäss Beispiel 1 erhaltenen Farbstoffes und 0,30 Teile des gelben Farbstoffes der Formel 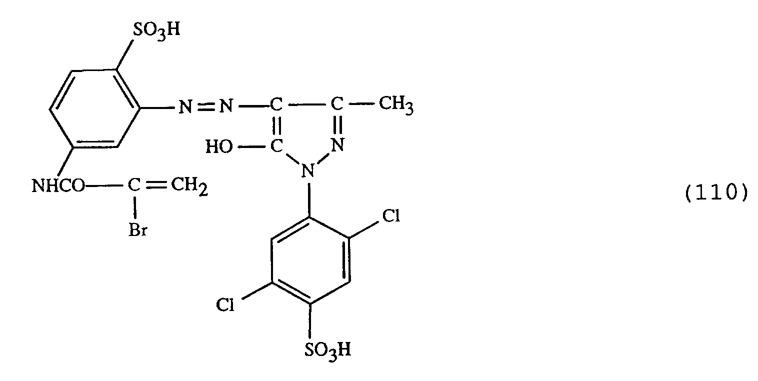
und 0,40 Teile des roten Farbstoffes der Formel 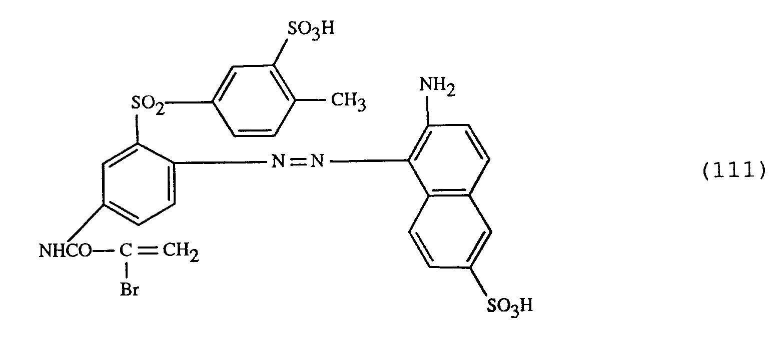
werden in 100 Teilen Wasser heiss gelöst und dem obigen Färbebadzugegeben. Dann wird mit 100 Teilen vorgenetztem Wollgewebe eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochendgefärbt. Der Farbstoff zieht fast vollkommen auf das Substrat auf. Nach Abkühlen des Bades auf 80° wird der pH-Wert vonetwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein faseregales dunkelbraun gefärbtes Wollgewebe von sehr guter Nass- und Reibechtheit sowie ausgezeichneter Lichtechtheit.

### Färbebeispiel 7

In 4000 Teilen Wasser von 50° werde nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,6 Teile des gemäss Beispiel 2 erhaltenen Farbstoffes und 0,09 Teile des gelben Farbstoffes der Formel 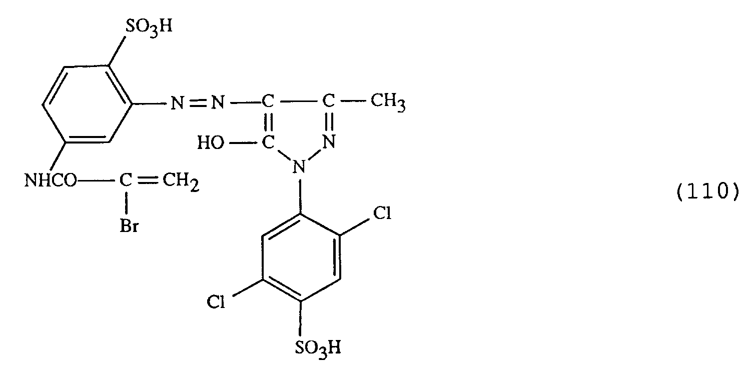
und 0,2 Teile des roten Farbstoffes der Formel 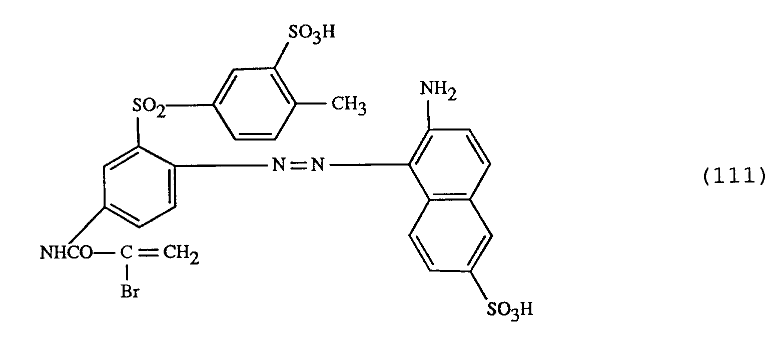
werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein grau gefärbtes Färbegut von sehr guter Nass- und Reibechtheit sowie ausgezeichneter Lichtechtheit.

## Patentansprüche (Patentansprüche für folgende(n) Vertragsstaat(en): BE, CH, DE, FR, GB, IT, LI)

1. Faserreaktive Formazanfarbstoffe der Formel 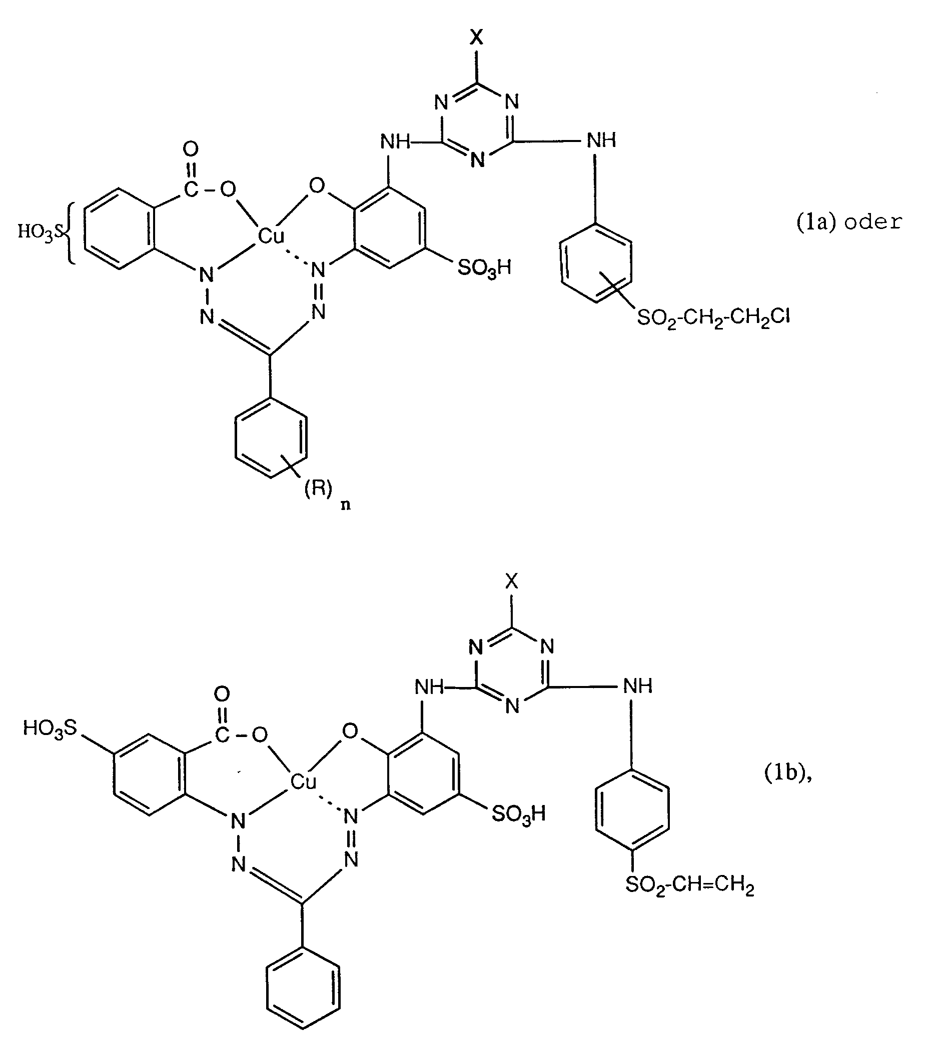 worin R C₁-C₄-Alkyl, C₁-C₄-Alkoxy, Halogen, Cyan oder Nitro, X Fluor oder Chlor und n die Zahl 0, 1 oder 2 ist.

2. Faserreaktive Formazanfarbstoffe gemäss Anspruch 1 der Formel 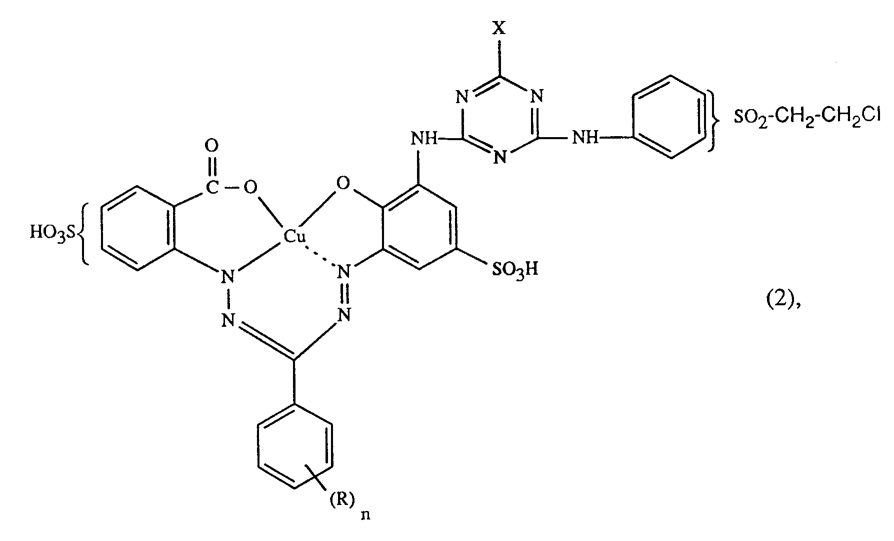 worin R, X und n die in Anspruch 1 angegebenen Bedeutungen haben.

3. Faserreaktive Formazanfarbstoffe gemäss einem der Ansprüche 1 und 2, dadurch gekennzeichnet, dass n die Zahl 0 ist.

4. Faserreaktive Formazanfarbstoffe gemäss einem der Ansprüche 1 bis 3, worin X Chlor bedeutet.

5. Verfahren zur Herstellung von faserreaktiven Formazanfarbstoffen gemäss Anspruch 1, dadurch gekennzeichnet, dass man eine Verbindung der Formel 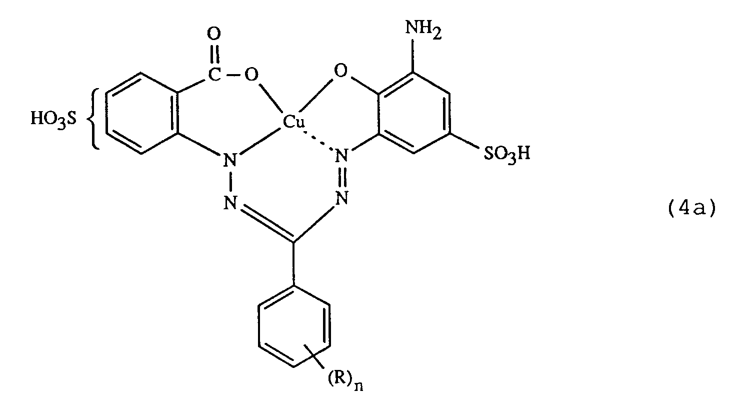 mit einer den Rest der Formel 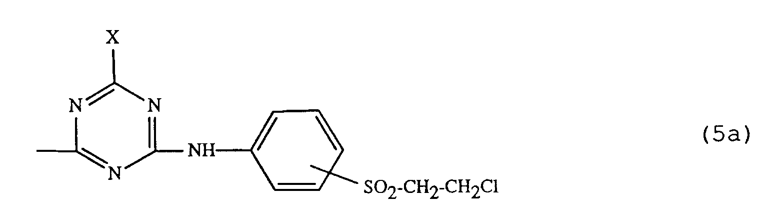 einführenden Verbindung umsetzt,
oder eine Verbindung der Formel 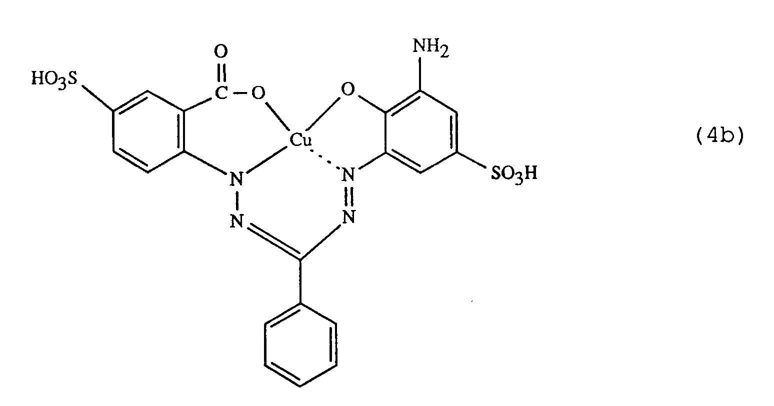 mit einer den Rest der Formel 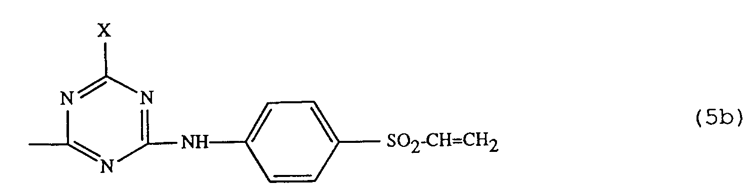 einführenden Verbindung umsetzt, wobei R, X und n die in Anspruch 1 angegebenen Bedeutungen haben.

6. Verwendung der faserreaktiven Formazanfarbstoffe gemäss einem der Ansprüche 1 bis 4, bzw. der gemäss Anspruch 5 erhaltenen faserreaktiven Formazanfarbstoffe zum Färben und Bedrucken.

7. Verwendung gemäss Anspruch 6 zum Färben und Bedrucken von Papier, Leder oder hydroxylgruppenhaltigen oder stickstoffhaltigen Textilfasermaterialien.

8. Verfahren zum Trichromie-Färben oder -Bedrucken von natürlichen und synthetischen Polyamidfasermaterialien mit Farbstoffmischungen, dadurch gekennzeichnet, dass man einen faserreaktiven Formazanfarbstoff der Formel 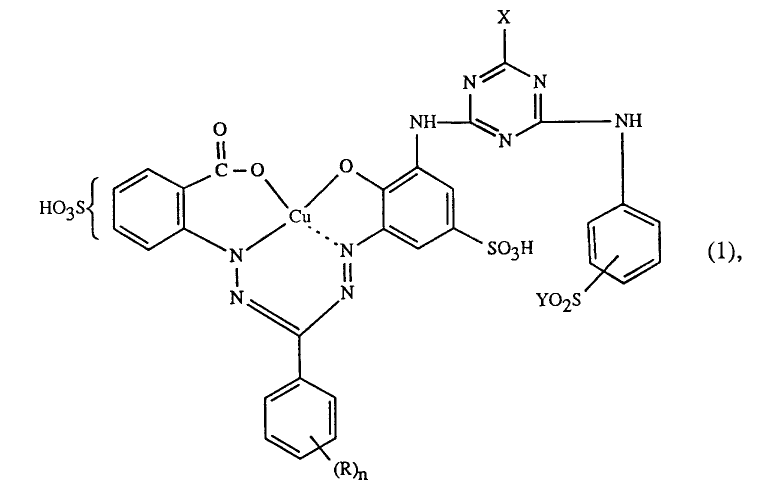 worin R C₁-C₄-Alkyl, C₁-C₄-Alkoxy, Halogen, Cyan oder Nitro, X Fluor oder Chlor, Y β-Chloräthyl oder Vinyl und n die Zahl 0, 1 oder 2 ist, zusammen mit einem faserreaktiven, sulfogruppenhaltigen gelb- oder orangefärbenden Farbstoff und einen faserreaktiven, sulfogruppenhaltigen rotfärbenden Farbstoff verwendet.

9. Verfahren gemäss Anspruch 8, dadurch gekennzeichnet, dass man als faserreaktive, sulfogruppenhaltige gelb- oder orange- und rotfärbende Farbstoffe Azofarbstoffe verwendet.

10. Verfahren gemäss einem der Ansprüche 8 und 9, dadurch gekennzeichnet, dass die gelb- oder orange- und rotfärbenden Farbstoffe als faserreaktive Gruppe jeweils eine Halogentriazin-, Halogenpyrimidin-Gruppe oder eine Gruppe der aliphatischen Reihe enthalten.

11. Verfahren gemäss einem der Ansprüche 8 bis 10, dadurch gekennzeichnet, dass die gelb- oder orange- und rotfärbenden Farbstoffe als faserreaktive Gruppe Difluorchlorpyrimidinyl, insbesondere 2,4-Difluor-5-chlorpyrimidinyl, oder α,β-Dihalogenpropionyl, insbesondere α,β-Dibrompropionyl, oder α-Halogenacryloyl, insbesondere α-Bromacryloyl, enthalten.

12. Verfahren gemäss einem der Ansprüche 8 bis 11, dadurch gekennzeichnet, dass zum Trichromie-Färben oder -Bedrucken natürliches Polyamidmaterial, insbesondere Wolle, verwendet wird.

13. Trichromie-Farbstoffmischung, dadurch gekennzeichnet, dass sie einen faserreaktiven Formazanfarbstoff der Formel 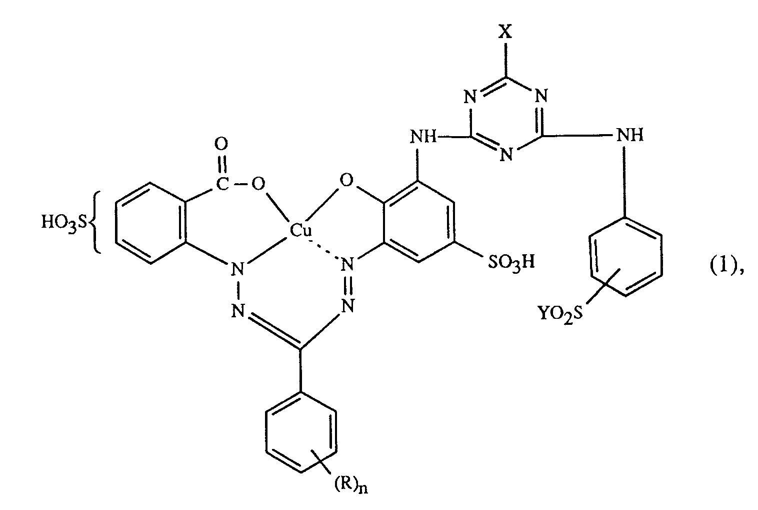 worin R C₁-C₄-Alkyl, C₁-C₄-Alkoxy, Halogen, Cyan oder Nitro, X Fluor oder Chlor, Y β-Chloräthyl oder Vinyl und n die Zahl 0, 1 oder 2 ist, zusammen mit einem faserreaktiven, sulfogruppenhaltigen gelb- oder orangefärbenden Farbstoff und einem faserreaktiven, sulfogruppenhaltigen rotfärbenden Farbstoff enthält.

## Patentansprüche (Patentansprüche für folgende(n) Vertragsstaat(en): ES)

1. Verfahren zur Herstellung von faserreaktiven Formazanfarbstoffen der Formel 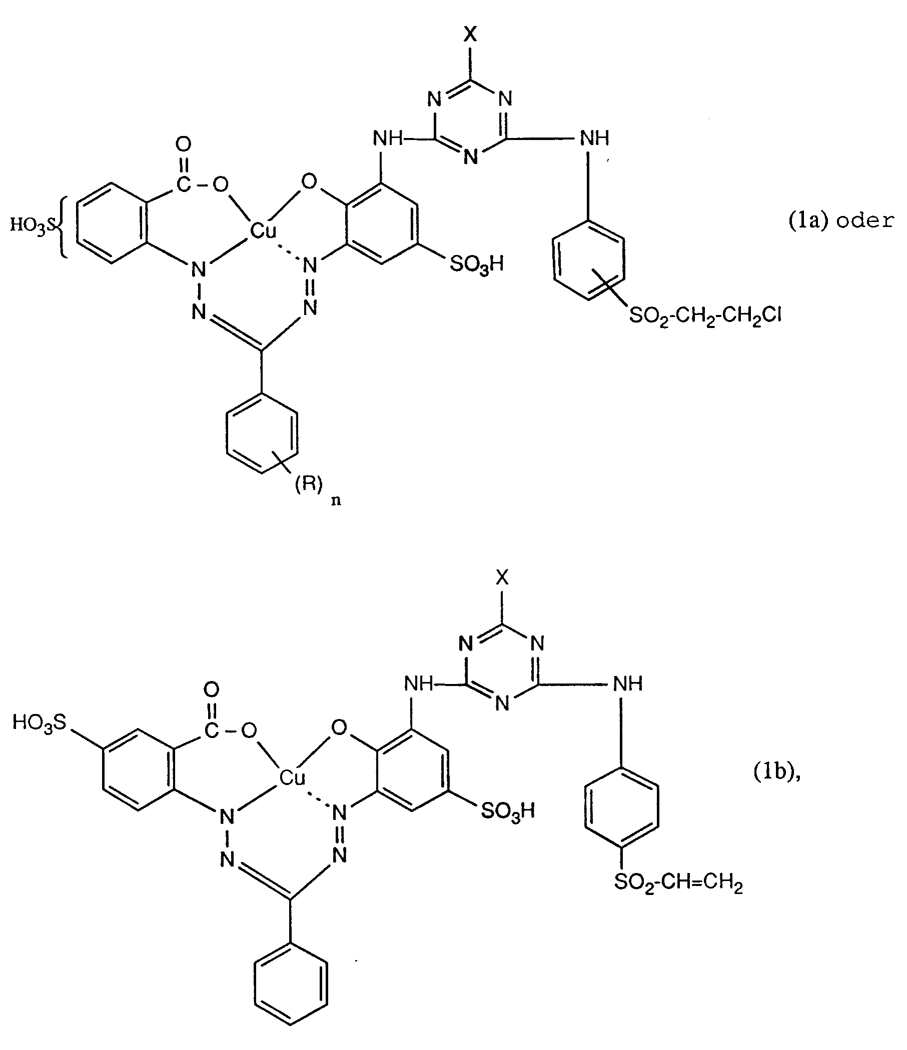 worin R C₁-C₄-Alkyl, C₁-C₄-Alkoxy, Halogen, Cyan oder Nitro, X Fluor oder Chlor und n die Zahl 0, 1 oder 2 ist, dadurch gekennzeichnet, dass man eine Verbindung der Formel 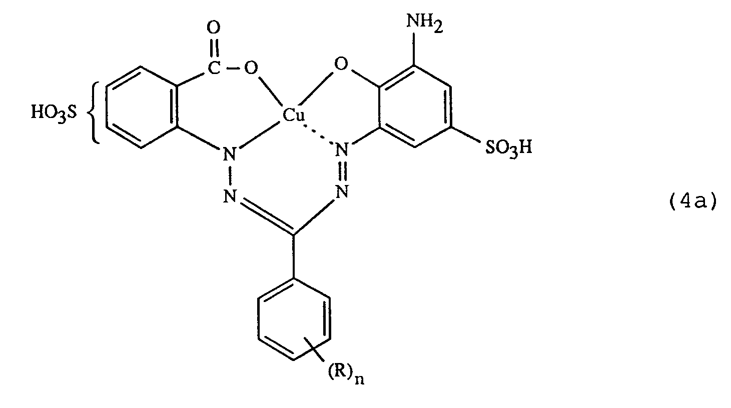 mit einer den Rest der Formel 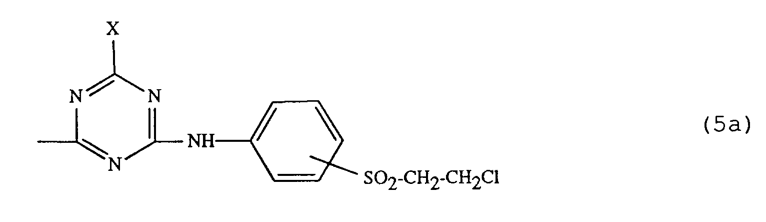 einführenden Verbindung umsetzt,
oder eine Verbindung der Formel 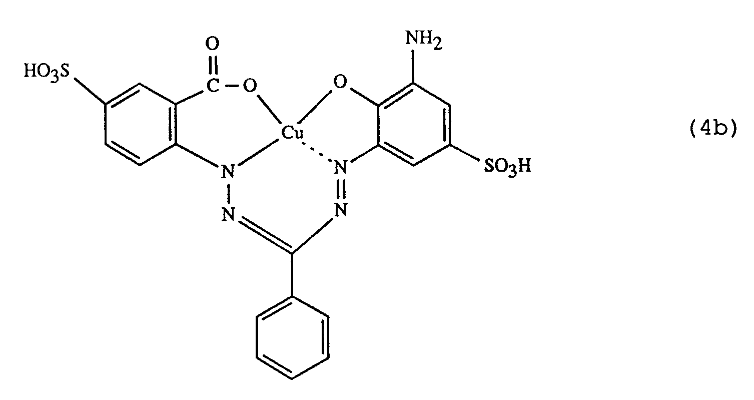 mit einer den Rest der Formel 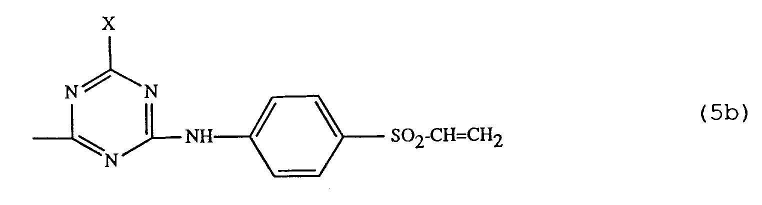 einführenden Verbindung umsetzt, wobei R, X und n die oben angegebenen Bedeutungen haben.

2. Verfahren gemäss Anspruch 1, dadurch gekennzeichnet, dass man als Verbindung der Formel (5a) eine Verbindung der Formel 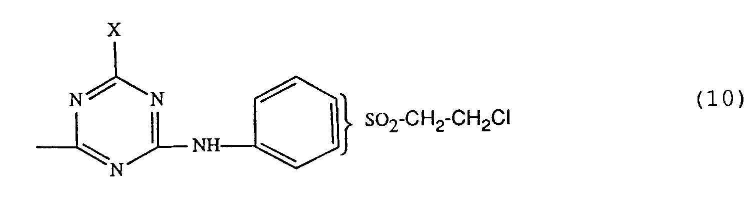 verwendet, wobei X die in Anspruch 1 angegebenen Bedeutungen hat.

3. Verfahren gemäss einem der Ansprüche 1 und 2, dadurch gekennzeichnet, dass man eine Verbindung der Formel (4a) verwendet, worin n die Zahl 0 ist.

4. Verfahren gemäss einem der Ansprüche 1 bis 3, dadurch gekennzeichnet, dass man eine Verbindung der Formel (5a) oder eine Verbindung der Formel (5b) verwendet, worin X Chlor bedeutet.

5. Verwendung der gemäss einem der Ansprüche 1 bis 4 erhaltenen faserreaktiven Formazanfarbstoffe zum Färben und Bedrucken.

6. Verwendung gemäss Anspruch 5 zum Färben und Bedrucken von Papier, Leder oder hydroxylgruppenhaltigen oder stickstoffhaltigen Textilfasermaterialien.

7. Verfahren zum Trichromie-Färben oder -Bedrucken von natürlichen und synthetischen Polyamidfasermaterialien mit Farbstoffmischungen, dadurch gekennzeichnet, dass man einen faserreaktiven Formazanfarbstoff der Formel 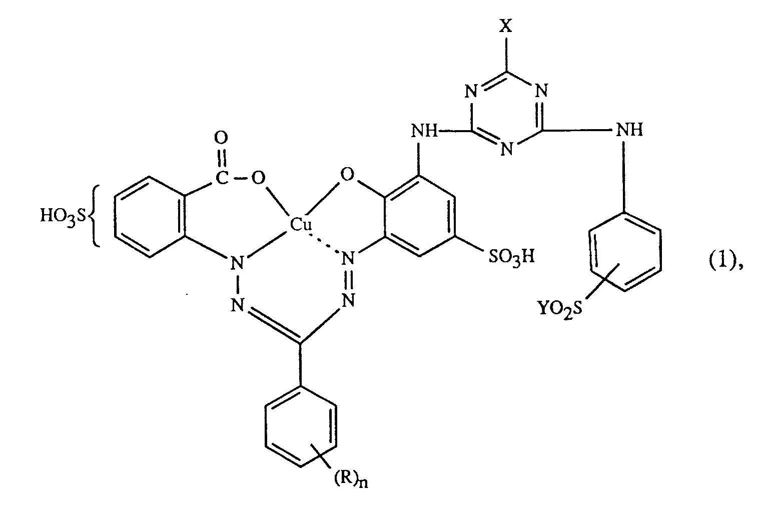 worin R C₁-C₄-Alkyl, C₁-C₄-Alkoxy, Halogen, Cyan oder Nitro, X Fluor oder Chlor, Y β-Chloräthyl oder Vinyl und n die Zahl 0, 1 oder 2 ist, zusammen mit einem faserreaktiven, sulfogruppenhaltigen gelb- oder orangefärbenden Farbstoff und einen faserreaktiven, sulfogruppenhaltigen rotfärbenden Farbstoff verwendet.

8. Verfahren gemäss Anspruch 7, dadurch gekennzeichnet, dass man als faserreaktive, sulfogruppenhaltige gelb- oder orange- und rotfärbende Farbstoffe Azofarbstoffe verwendet.

9. Verfahren gemäss einem der Ansprüche 7 und 8, dadurch gekennzeichnet, dass die gelb- oder orange- und rotfärbenden Farbstoffe als faserreaktive Gruppe jeweils eine Halogentriazin-, Halogenpyrimidin-Gruppe oder eine Gruppe der aliphatischen Reihe enthalten.

10. Verfahren gemäss einem der Ansprüche 7 bis 9, dadurch gekennzeichnet, dass die gelb- oder orange- und rotfärbenden Farbstoffe als faserreaktive Gruppe Difluorchlorpyrimidinyl, insbesondere 2,4-Difluor-5-chlorpyrimidinyl, oder α,β-Dihalogenpropionyl, insbesondere α,β-Dibrompropionyl, oder α-Halogenacryloyl, insbesondere α-Bromacryloyl, enthalten.

11. Verfahren gemäss einem der Ansprüche 7 bis 10, dadurch gekennzeichnet, dass zum Trichromie-Färben oder -Bedrucken natürliches Polyamidmaterial, insbesondere Wolle, verwendet wird.

12. Verfahren zur Herstellung von Trichromie-Farbstoffmischungen, dadurch gekennzeichnet, dass man einen faserreaktiven Formazanfarbstoff der Formel 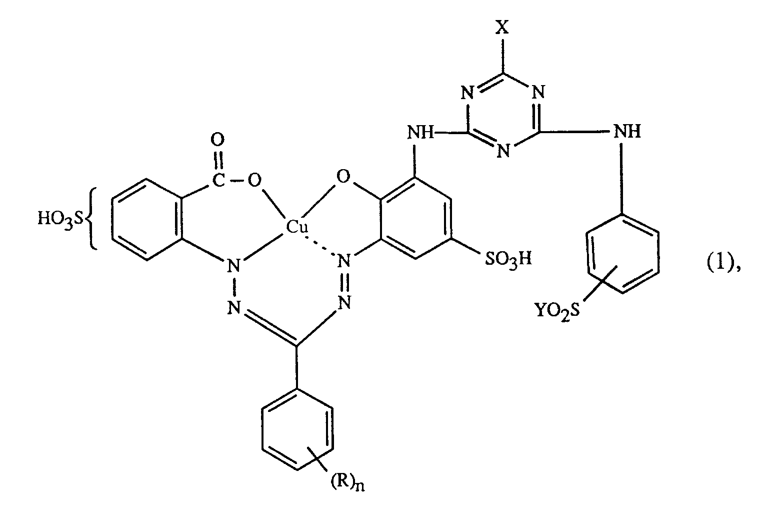 worin R C₁-C₄-Alkyl, C₁-C₄-Alkoxy, Halogen, Cyan oder Nitro, X Fluor oder Chlor, Y β-Chloräthyl oder Vinyl und n die Zahl 0, 1 oder 2 ist, mit einem faserreaktiven, sulfogruppenhaltigen gelb- oder orangefärbenden Farbstoff und einem faserreaktiven, sulfogruppenhaltigen rotfärbenden Farbstoff mischt.

## Claims (Claims for the following Contracting State(s): BE, CH, DE, FR, GB, IT, LI)

1. A fibre-reactive formazan dye of the formula 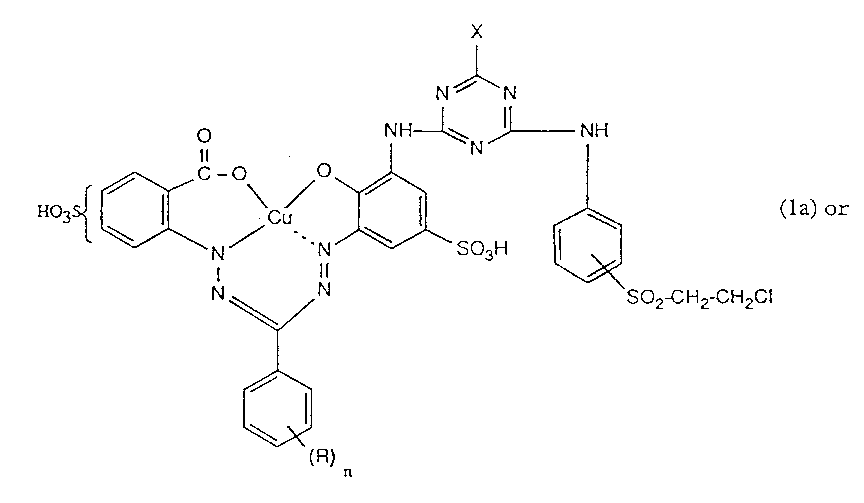 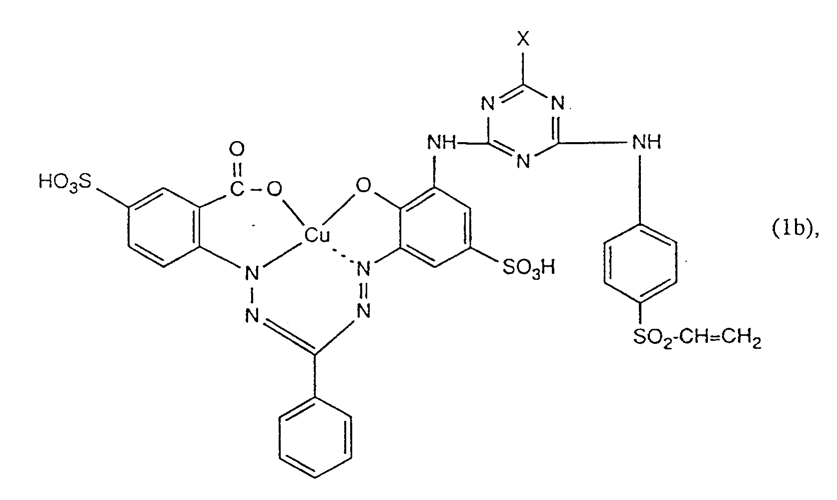 in which R is C₁-C₄alkyl, C₁-C₄alkoxy, halogen, cyano or nitro, X is fluorine or chlorine and n is the number 0, 1 or 2.

2. A fibre-reactive formazan dye according to claim 1 of the formula 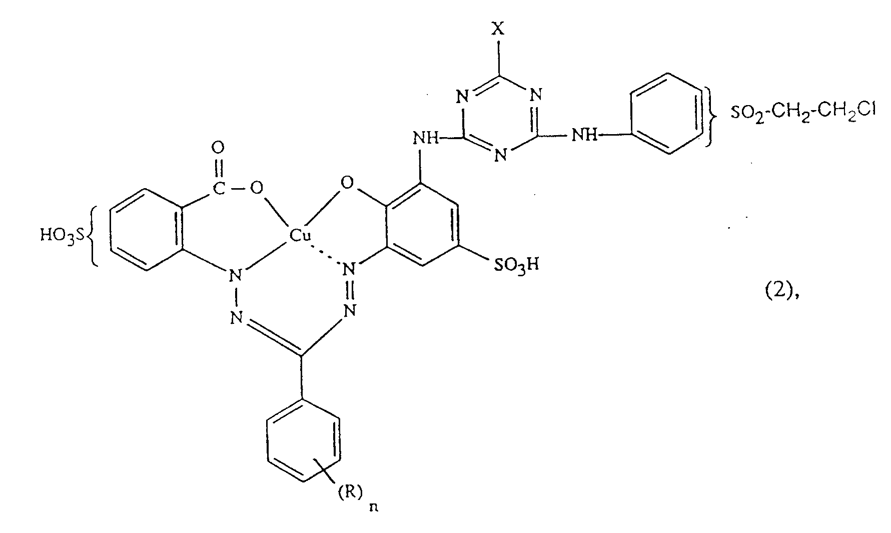 in which R, X and n are as defined in claim 1.

3. A fibre-reactive formazan dye according to any one of claims 1 and 2, wherein n is the number 0.

4. A fibre-reactive formazan dye according to any one of claims 1 to 3, in which X is chlorine.

5. A process for the preparation of a fibre-reactive formazan dye according to claim 1, which comprises reacting a compound of the formula 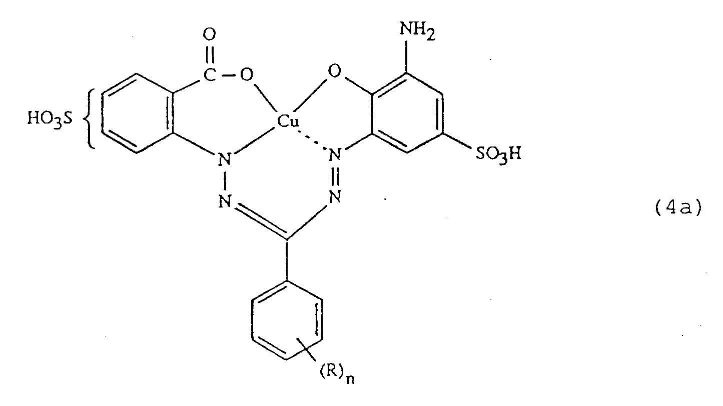 with a compound which introduces the radical of the formula 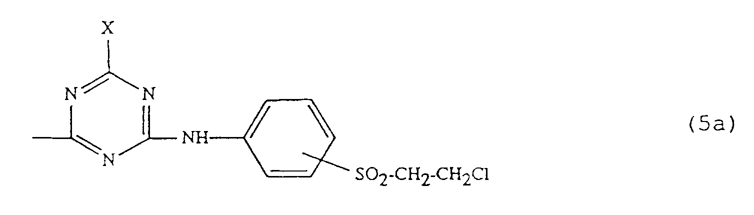 or reacting a compound of the formula 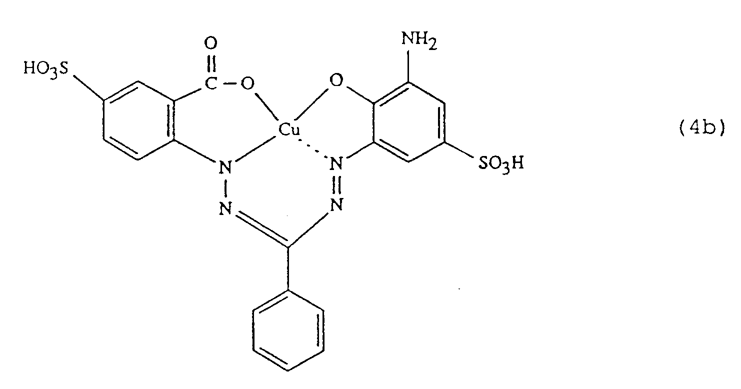 with a compound which introduces the radical of the formula 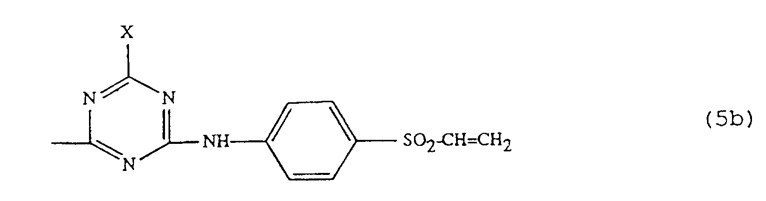 in which R, X and n are as defined in claim 1.

6. Use of a fibre-reactive formazan dye according to any one of claims 1 to 4 or a fibre-reactive formazan dye obtained according to claim 5 for dyeing and printing.

7. Use according to claim 6 for dyeing and printing paper, leather or hydroxyl-containing or nitrogen-containing textile fibre material.

8. A process for the trichromatic dyeing or printing of natural and synthetic polyamide fibre materials with dye mixtures, wherein a fibre-reactive formazan dye of the formula 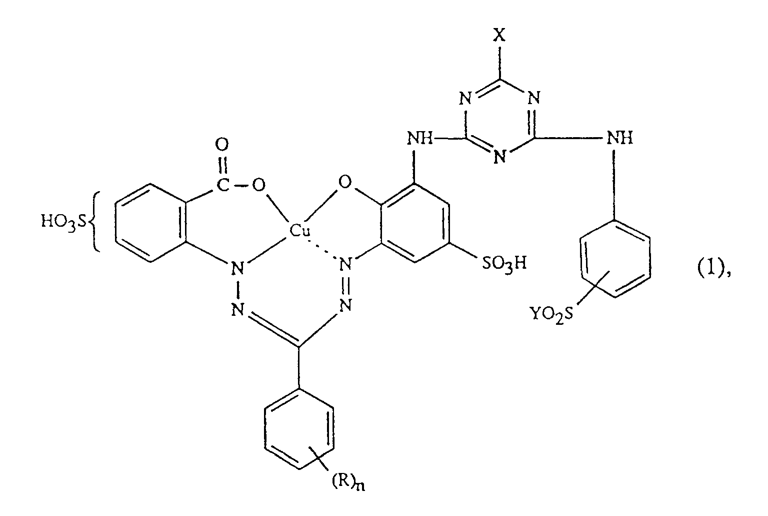 in which R is C₁-C₄alkyl, C₁-C₄alkoxy, halogen, cyano or nitro, X is fluorine or chlorine, Y is β-chloroethyl or vinyl and n is the number 0, 1 or 2, is used together with a fibre-reactive sulfo-containing yellow or orange dye and a fibre-reactive sulfo-containing red dye.

9. A process according to claim 8, wherein azo dyes are used as fibre-reactive sulfo-containing yellow or orange and red dyes.

10. A process according to either of claims 8 and 9, wherein the yellow or orange and red dyes contain, as fibre-reactive group, a halotriazine, halopyrimidine group or a group of the aliphatic series, respectively.

11. A process according to any one of claims 8 to 10, wherein the yellow or orange and red dyes contain, as fibre-reactive group, difluorochloropyrimidinyl, in particular 2,4-difluoro-5-chloropyrimidinyl, or α,β-dihalopropionyl, in particular α,β-dibromopropionyl, or α-haloacryloyl, in particular α-bromoacryloyl.

12. A process according to any one of claims 8 to 11, wherein natural polyamide material, in particular wool, is used for the trichromatic dyeing or printing.

13. A trichromatic dye mixture, which contains a fibre-reactive formazan dye of the formula 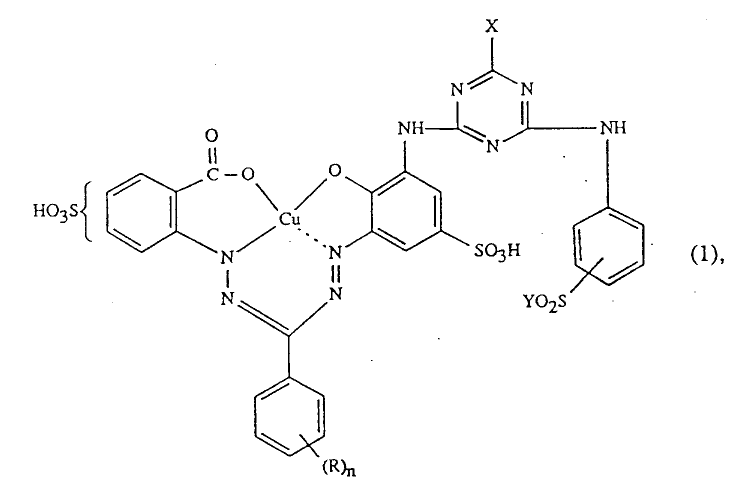 in which R is C₁-C₄alkyl, C₁-C₄alkoxy, halogen, cyano or nitro, X is fluorine or chlorine, Y is β-chloroethyl or vinyl and n is the number 0, 1 or 2 together with a fibre-reactive sulfo-containing yellow or orange dye and a fibre-reactive sulfo-containing red dye.

## Claims (Claims for the following Contracting State(s): ES)

1. A process for the preparation of a fibre-reactive formazan dye of the formula 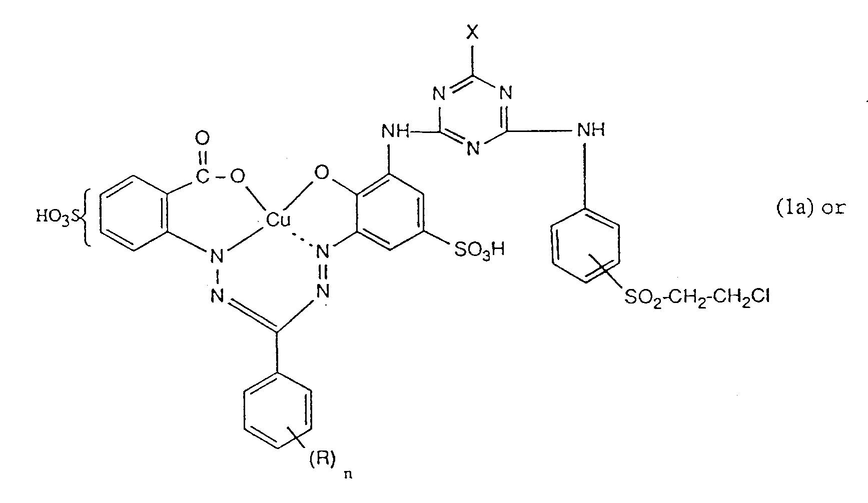 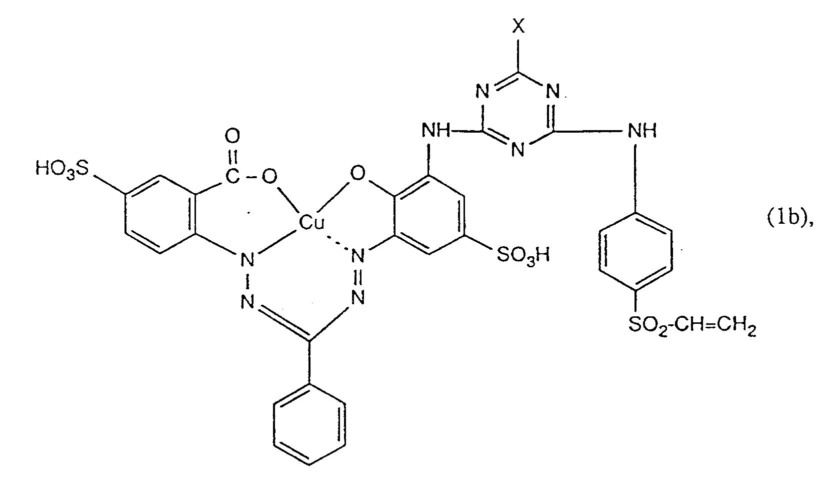 in which R is C₁-C₄alkyl, C₁-C₄alkoxy, halogen, cyano or nitro, X is fluorine or chlorine and n is the number 0, 1 or 2, which comprises reacting a compound of the formula 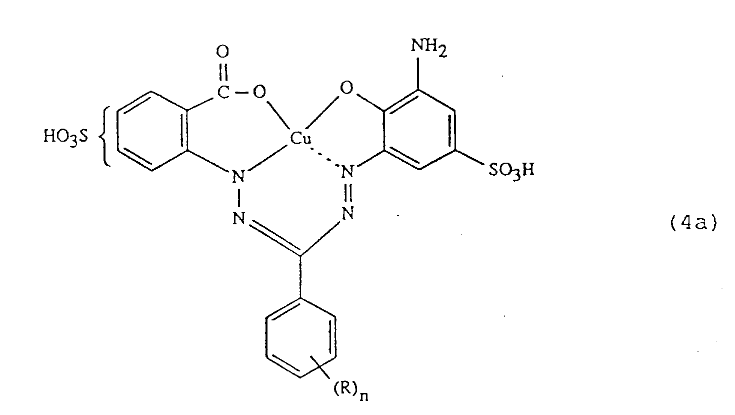 with a compound which introduces the radical of the formula 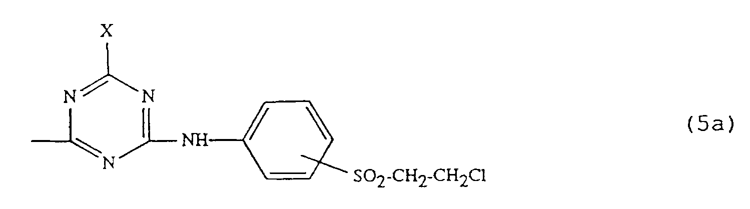 or reacting a compound of the formula 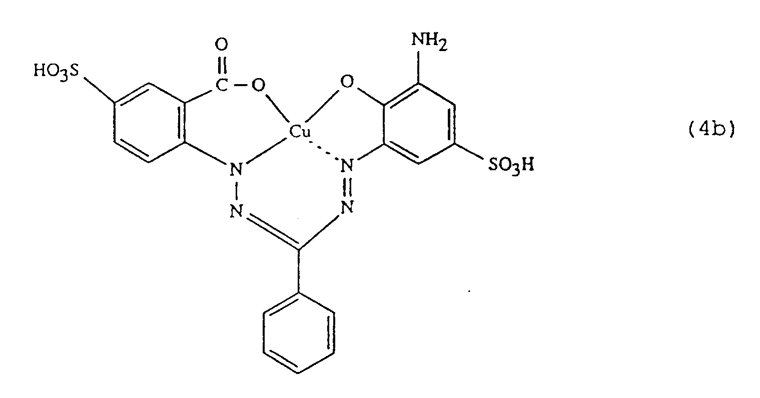 with a compound which introduces the radical of the formula 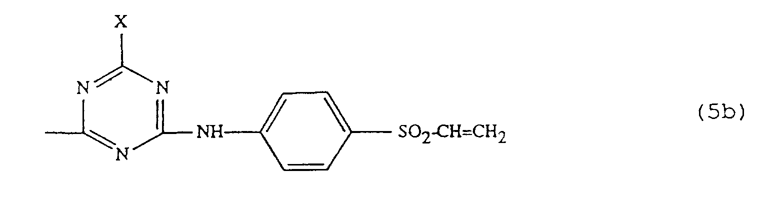 in which R, X and n are as defined in claim 1.

2. A process according to claim 1, which comprises using as compound of the formula (5a) a compound of the formula 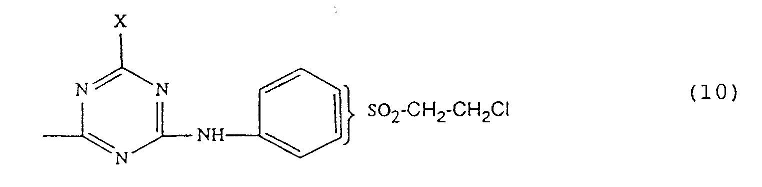 in which X is as defined in claim 1.

3. A process according to any one of claims 1 and 2, wherein a compound of the formula (4a) is used in which n is the number 0.

4. A process according to any one of claims 1 to 3, wherein a compound of the formula (5a) or a compound of the formula (5b) is used in which X is chlorine.

5. Use of a fibre-reactive formazan dye obtained according to any one of claims 1 to 4 for dyeing and printing.

6. Use according to claim 5 for dyeing and printing paper, leather or hydroxyl-containing or nitrogen-containing textile fibre material.

7. A process for the trichromatic dyeing or printing of natural and synthetic polyamide fibre materials with dye mixtures, wherein a fibre-reactive formazan dye of the formula 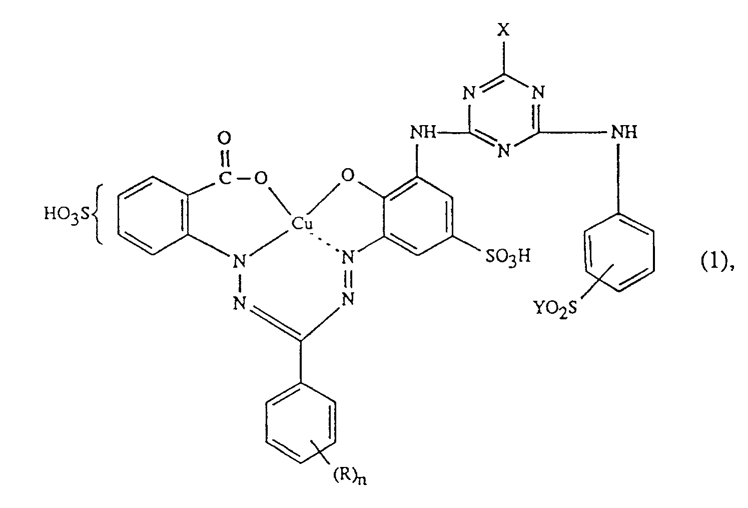 in which R is C₁-C₄alkyl, C₁-C₄alkoxy, halogen, cyano or nitro, X is fluorine or chlorine, Y is β-chloroethyl or vinyl and n is the number 0, 1 or 2, is used together with a fibre-reactive sulfo-containing yellow or orange dye and a fibre-reactive sulfo-containing red dye.

8. A process according to claim 7, wherein azo dyes are used as fibre-reactive sulfo-containing yellow or orange and red dyes.

9. A process according to either of claims 7 and 8, wherein the yellow or orange and red dyes contain, as fibre-reactive group, a halotriazine, halopyrimidine group or a group of the aliphatic series, respectively.

10. A process according to any one of claims 7 to 9, wherein the yellow or orange and red dyes contain, as fibre-reactive group, difluorochloropyrimidinyl, in particular 2,4-difluoro-5-chloropyrimidinyl, or α,β-dihalopropionyl, in particular α,β-dibromopropionyl, or α-haloacryloyl, in particular α-bromoacryloyl.

11. A process according to any one of claims 7 to 10, wherein natural polyamide material, in particular wool, is used for the trichromatic dyeing or printing.

12. A method of preparing a trichromatic dye mixture, which comprises mixing a fibre-reactive formazan dye of the formula 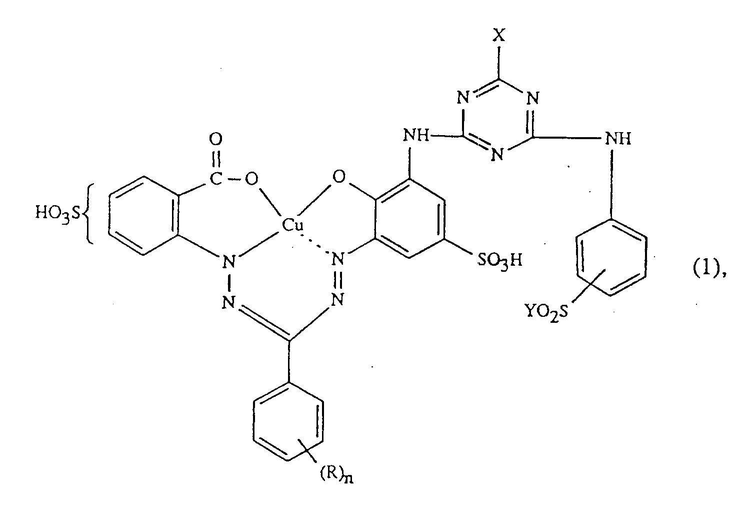 in which R is C₁-C₄alkyl, C₁-C₄alkoxy, halogen, cyano or nitro, X is fluorine or chlorine, Y is β-chloroethyl or vinyl and n is the number 0, 1 or 2 with a fibre-reactive sulfo-containing yellow or orange dye and a fibre-reactive sulfo-containing red dye.

## Revendications (Revendications pour l'(les) Etat(s) contractant(s) suivant(s): BE, CH, DE, FR, GB, IT, LI)

1. Colorants de type formazan réactifs vis-à-vis des fibres de formule 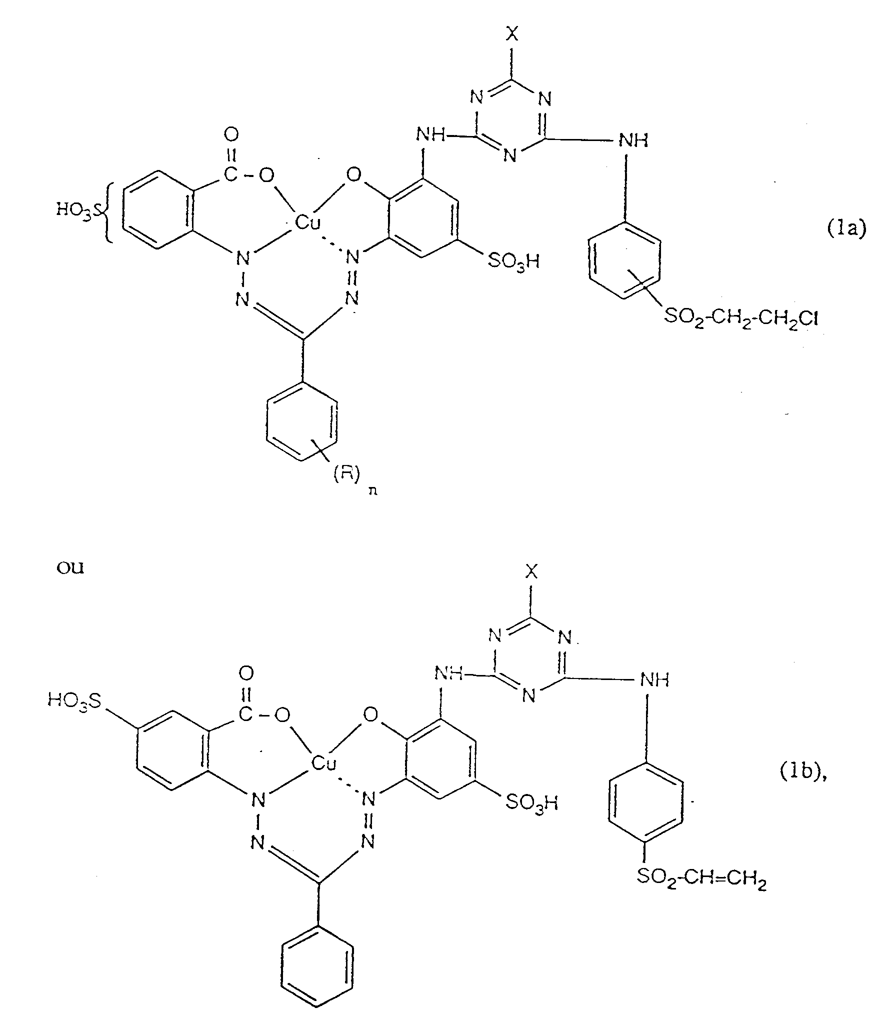 dans lesquelles R représente un groupe alkyle en C₁₋₄, alcoxy en C₁₋₄, un atome d'halogène, un groupe cyano ou nitro, X représente un atome de fluor ou de chlore et n un nombre égal à 0, 1 ou 2.

2. Colorants de type formazan réactifs vis-à-vis des fibres conformes à la revendication 1 de formule 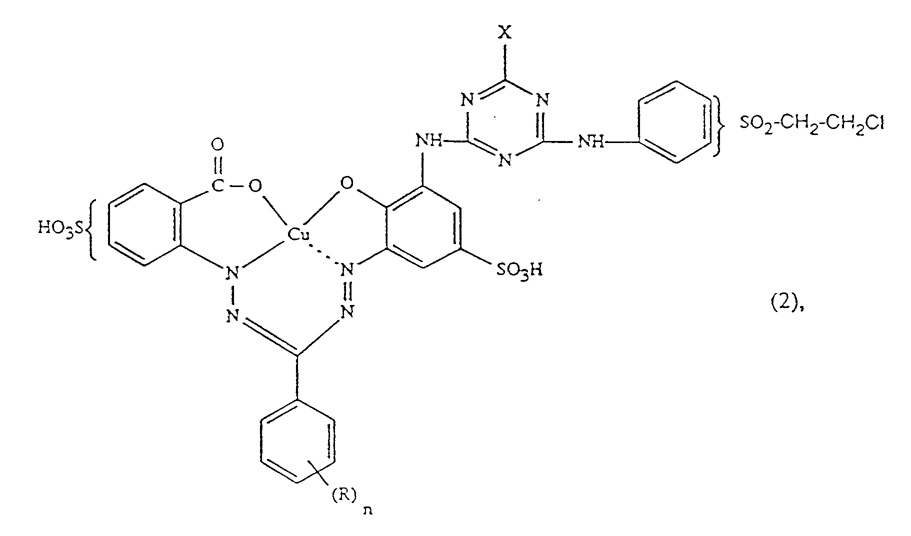 dans laquelle R, X et n ont les significations indiquées dans la revendication 1.

3. Colorants de type formazan réactifs vis-à-vis des fibres conformes à une des revendications 1 et 2, caractérisés en ce que n est égal à 0.

4. Colorants de type formazan réactifs vis-à-vis des fibres conformes à une des revendications 1 à 3, caractérisés en ce que X représente un atome de chlore.

5. Procédé pour préparer les colorants de type formazan réactifs vis-à-vis des fibres conformes à la revendication 1, caractérisé en ce que l'on fait réagir un composé de formule 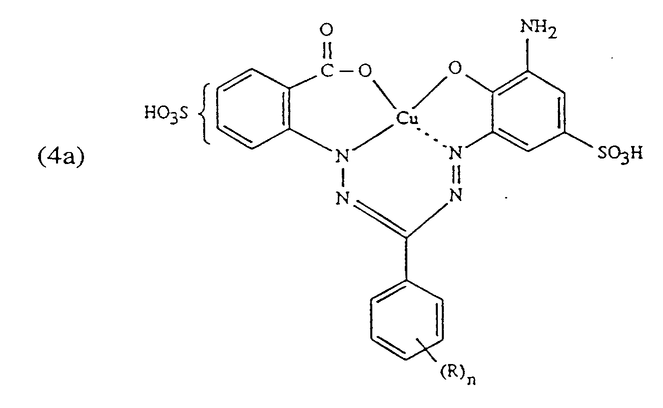 avec un composé introduisant un résidu de formule 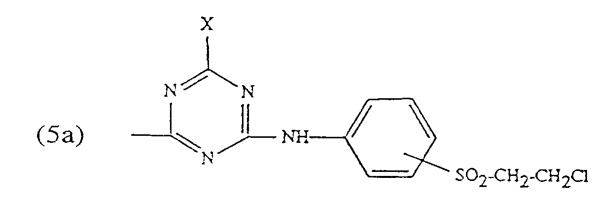 ou en faisant réagir un composé de formule 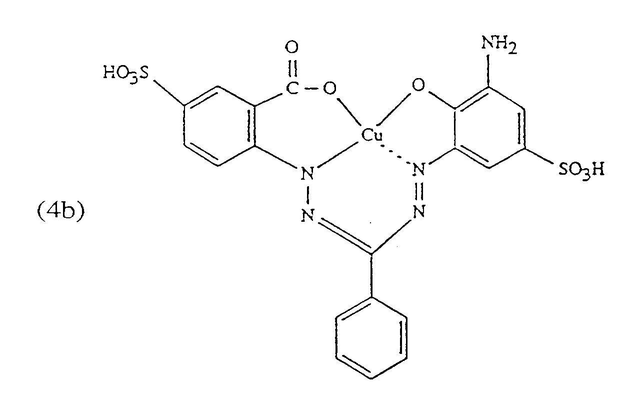 avec un composé introduisant un résidu de formule 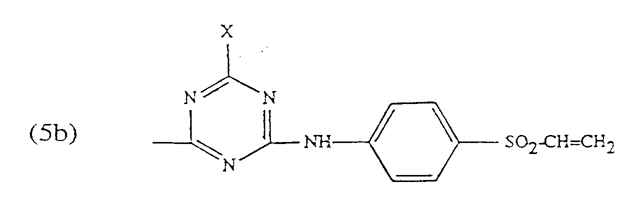 où R, X et n ont la signification indiquée dans la revendication 1.

6. Utilisation des colorants de type formazan réactifs vis-à-vis des fibres conformes à une des revendications 1 à 4 ou obtenus conformément à la revendication 5 pour la teinture et l'impression.

7. Utilisation conforme à la revendication 6 pour la teinture et l'impression de papier, de cuir ou de matériaux fibreux textiles contenant des groupes hydroxyle ou des atomes d'azote.

8. Procédé pour la teinture ou l'impression en trichromie de matériaux fibreux en polyamide naturel ou synthétique à l'aide de mélanges de colorants, caractérisé en ce que l'on utilise un colorant de type formazan de formule 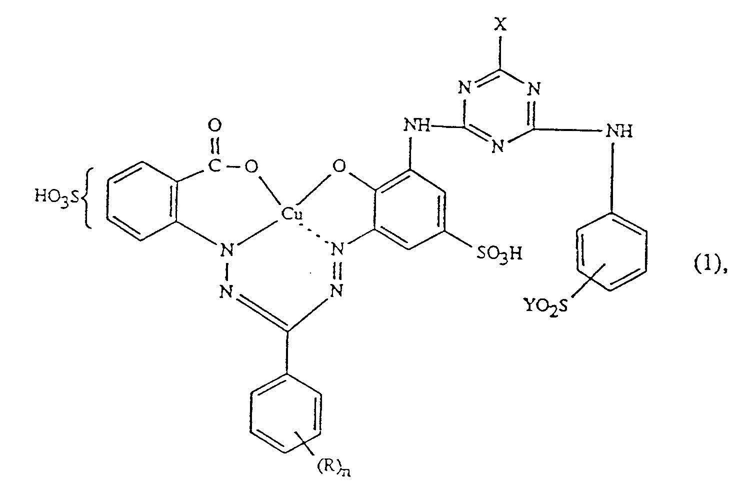 dans lequel R représente un groupe alkyle en C₁₋₄, alcoxy en C₁₋₄, un atome d'halogène, un groupe cyano ou nitro, X représente un atome de fluor ou de chlore, Yreprésente un groupe β-chloroéthyle ou vinyle et n un nombre égal à 0, 1 ou 2, ensemble avec un colorant jaune ou orange réactif vis-à-vis des fibres et contenant un ou plusieurs groupes sulfo et avec un colorant rouge réactif vis-à-vis des fibres et contenant un ou plusieurs groupes sulfo.

9. Procédé conforme à la revendication 8, caractérisé en ce que l'on utilise, comme colorants jaunes ou oranges et rouges réactifs vis-à-vis des fibres et contenant des groupes sulfo, des colorants azoïques.

10. Procédé conforme à une des revendications 8 et 9, caractérisé en ce que les colorants jaunes ou oranges et rouges contiennent, comme groupe réactif vis-à-vis des fibres, un groupe de type halogénotriazine, halogénopyrimidine ou un groupe de la série aliphatique.

11. Procédé conforme à une des revendications 8 à 10, caractérisé en ce que les colorants jaunes ou oranges et rouges contiennent, comme groupe réactis vis-à-vis des fibres, des groupes difluorochloropyrimidinyle, en particulier le groupe 2,4-difluoro-5-chloropyrimidinyle, ou α,β-dihalogénopropionyle en particulier le groupe α,β-dibromopropionyle, ou α-halogénoacryloyle en particulier α-bromoacryloyle.

12. Procédé conforme à une des revendications 8 à 11, caractérisé en ce que l'on utilise pour la teinture ou l'impression en trichromie, du matériau en polyamide naturel, en particulier de la laine.

13. Mélange de colorants trichromique, caractérisé en ce qu'il contient un colorant de type formazan de formule 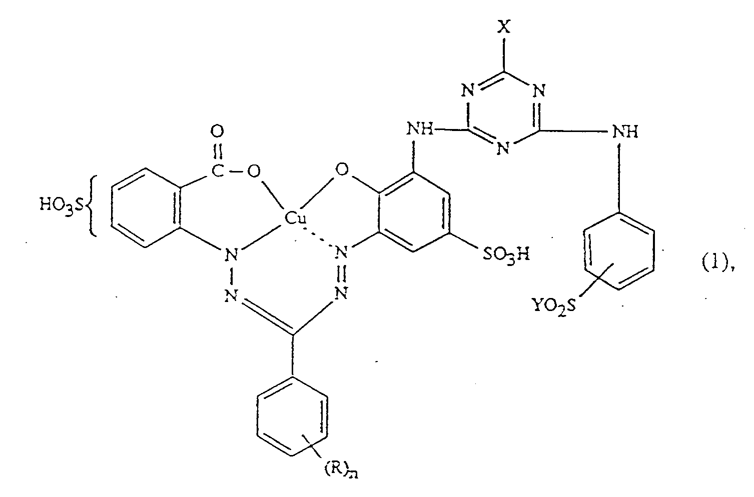 dans lequel R représente un groupe alkyle en C₁₋₄, alcoxy en C₁₋₄, un atome d'halogène, un groupe cyano ou nitro, X représente un atome de fluor ou de chlore, Y représente un groupe β-chloroéthyle ou vinyle et n un nombre égal à 0, 1 ou 2, ensemble avec un colorant jaune ou orange réactif vis-à-vis des fibres et contenant un ou plusieurs groupes sulfo et avec un colorant rouge réactif vis-à-vis des fibres et contenant un ou plusieurs groupes sulfo.

## Revendications (Revendications pour l'(les) Etat(s) contractant(s) suivant(s): ES)

1. Procédé de préparation de colorants de type formazan réactifs vis-à-vis des fibres de formule 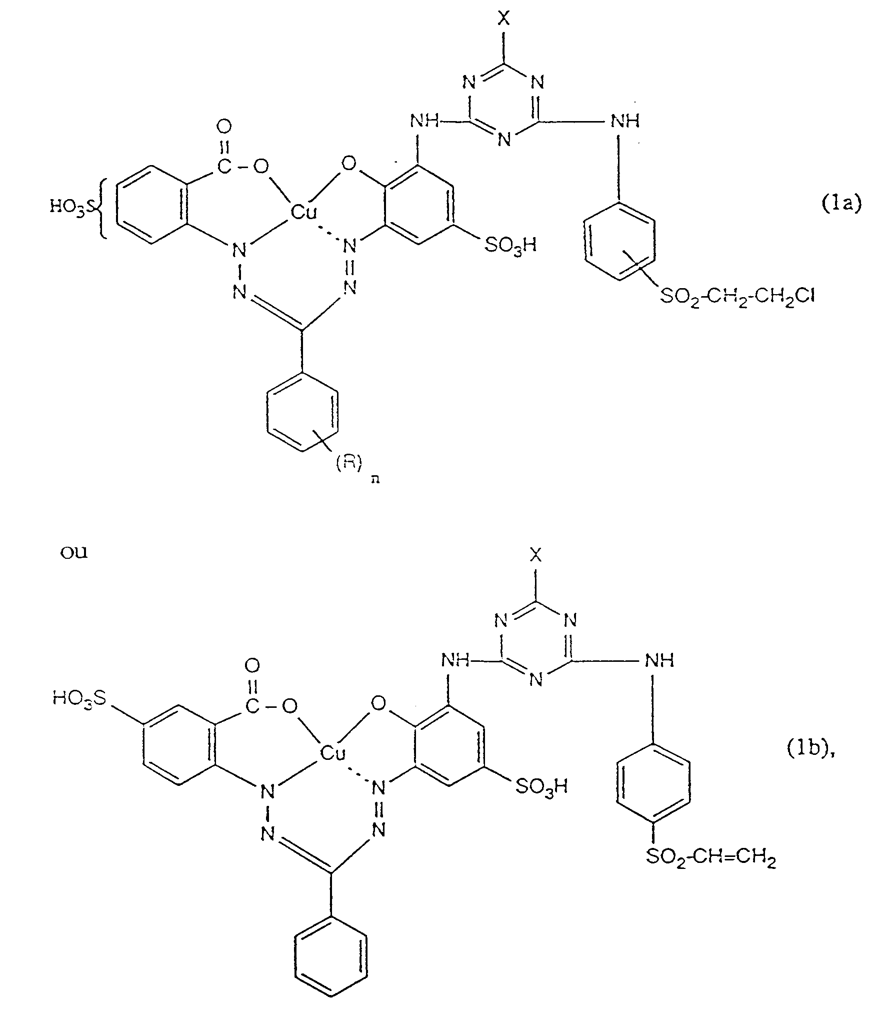 dans lesquelles R représente un groupe alkyle en C₁₋₄, alcoxy en C₁₋₄, un atome d'halogène, un groupe cyano ou nitro, X représente un atome de fluor ou de chlore et n un nombre égal à 0, 1 ou 2, caractérisé en ce que l'on fait réagir un composé de formule 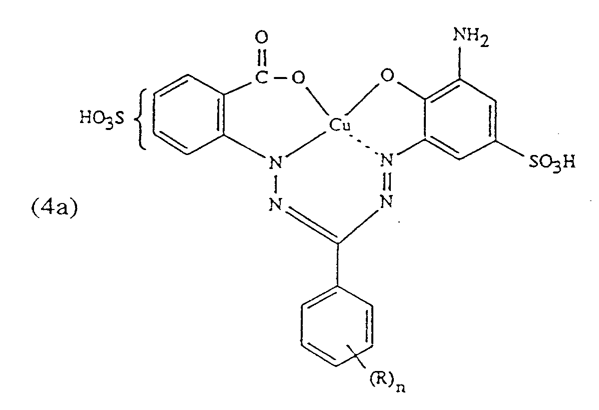 avec un composé introduisant un résidu de formule 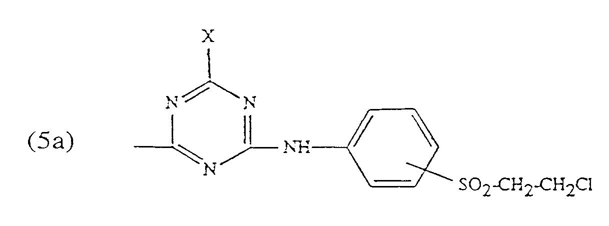 ou en ce que l'on fait réagir un composé de formule 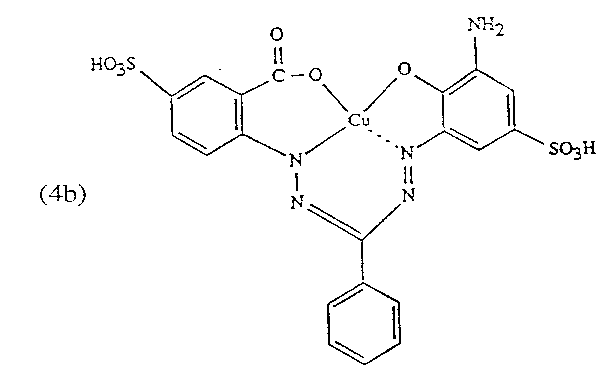 avec un composé introduisant un résidu de formule 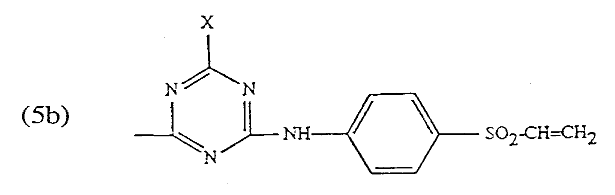 où R, X et n ont la signification indiquée ci-dessus.

2. Procédé conforme à la revendication 1, caractérisé en ce que l'on utilise, comme composé de formule (5a), un composé de formule 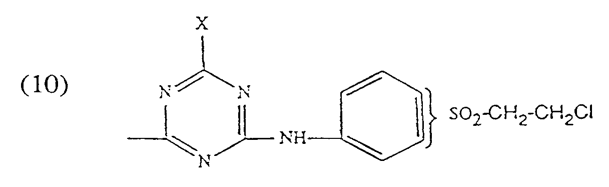 X ayant la signification indiquée dans la revendication 1.

3. Procédé conforme à une des revendications 1 et 2, caractérisé en ce que l'on utilise un composé de formule (4a) dans lequel n est égal à 0.

4. Procédé conforme à une des revendications 1 et 3, caractérisé en ce que l'on utilise un composé de formule (5a) ou un composé de formule (5b) dans lesquels X représente un atome de chlore.

5. Utilisation des colorants de type formazan réactifs vis-à-vis des fibres obtenus conformément à une des revendications 1 à 4 pour la teinture et l'impression.

6. Utilisation conforme à la revendication 5 pour la teinture et l'impression de papier, de cuir ou de matériaux fibreux textiles contenant des groupes hydroxyle ou des atomes d'azote.

7. Procédé pour la teinture ou l'impression en trichromie de matériaux fibreux en polyamide naturel ou synthétique à l'aide de mélanges de colorants, caractérisé en ce que l'on utilise un colorant de type formazan réactif vis-à-vis des fibres de formule 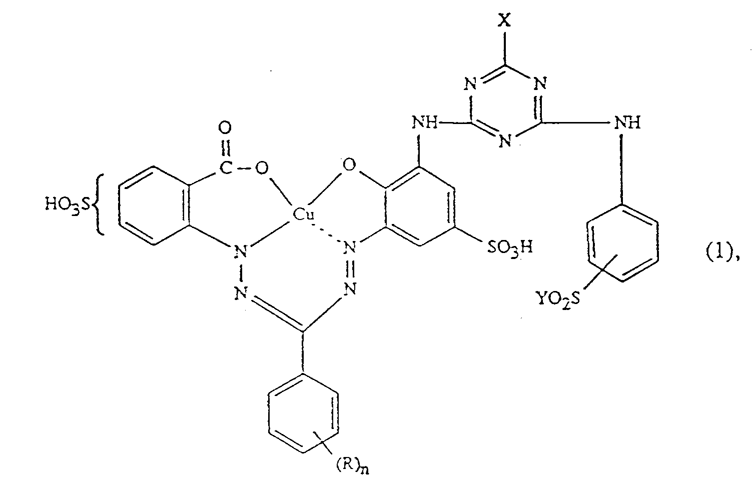 dans lequel R représente un groupe alkyle en C₁₋₄, alcoxy en C₁₋₄, un atome d'halogène, un groupe cyano ou nitro, X représente un atome de fluor ou de chlore, Y représente un groupe β-chloroéthyle ou vinyle et n un nombre égal à 0, 1 ou 2, ensemble avec un colorant jaune ou orange réactif vis-à-vis des fibres et contenant un ou plusieurs groupes sulfo et avec un colorant rouge réactif vis-à-vis des fibres et contenant un ou plusieurs groupes sulfo.

8. Procédé conforme à la revendication 7, caractérisé en ce que l'on utilise, comme colorants jaunes ou oranges et rouges réactifs vis-à-vis des fibres et contenant des groupes sulfo, des colorants azoïques.

9. Procédé conforme à une des revendications 7 et 8, caractérisé en ce que les colorants jaunes ou oranges et rouges contiennent, comme groupe réactif vis-à-vis des fibres, un groupe de type halogénotriazine, halogénopyrimidine ou un groupe de la série aliphatique.

10. Procédé conforme à une des revendications 7 à 9, caractérisé en ce que les colorants jaunes ou oranges et rouges contiennent, comme groupe réactis vis-à-vis des fibres, des groupes difluorochloropyrimidinyle, en particulier le groupe 2,4-difluoro-5-chloropyrimidinyle, ou α,β-dihalogénopropionyle en particulier le groupe α,β-dibromopropionyle, ou α-halogénoacryloyle en particulier α-bromoacryloyle.

11. Procédé conforme à une des revendications 7 à 10, caractérisé en ce que l'on utilise pour la teinture ou l'impression en trichromie, du matériau en polyamide naturel, en particulier de la laine.

12. Procédé de préparation de mélanges de colorants trichromiques, caractérisé en ce que l'on mélange un colorant de type formazan réactif vis-à-vis des fibres de formule 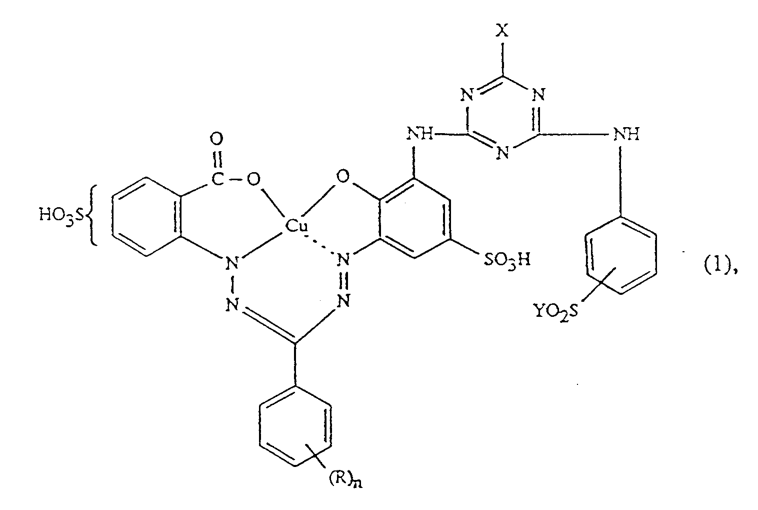 dans lequel R représente un groupe alkyle en C₁₋₄, alcoxy en C₁₋₄, un atome d'halogène, un groupe cyano ou nitro, X représente un atome de fluor ou de chlore, Y représente un groupe β-chloroéthyle ou vinyle et n un nombre égal à 0, 1 ou 2, avec un colorant jaune ou orange réactif vis-à-vis des fibres et contenant un ou plusieurs groupes sulfo et avec un colorant rouge réactif vis-à-vis des fibres et contenant un ou plusieurs groupes sulfo.
